# EUROPEAN PATENT APPLICATION

(11) **EP 3 525 546 A1**
(43) Date of publication of application: **14.08.2019**
(21) Application number: 17858713.5
(22) Date of filing: 29.09.2017
(51) Int. Cl.: H04W 76/10

(54) **METHOD FOR CONNECTING TO NETWORK AND USER EQUIPMENT**

(30) Priority: 05.10.2016 US 201662404231 P; 18.10.2016 US 201662409854 P; 20.10.2016 US 201662410816 P; 26.10.2016 US 201662412853 P; 28.10.2016 US 201662413982 P
(71) Applicant: LG Electronics Inc., Seoul 07336 (KR)
(72) Inventor: CHUN, Sungduck, Seoul 06772 (KR); KIM, Jaehyun, Seoul 06772 (KR); LEE, Ki-Dong, San Diego, California 92131 (US)
(74) Representative: Frenkel, Matthias Alexander
(86) International application number: PCT/KR2017/010932
(87) International publication number: WO 2018/066919

(57) **Abstract**

In a wireless communication system, a user equipment (UE) may perform a cell search for connection to a network or perform a search for another UE (relay UE). The user equipment may be configured to perform the search for a relay UE prior to the cell search. If the relay UE connected to an RAT cell supporting an indirect mode is searched, the UE may establish a connection with the network through the relay UE.

## Description

### Technical Field

The present invention relates to a wireless communication system and, more particularly, to a method for connecting to a network and a device thereof.

### Background Art

Wireless communication systems are widely deployed to provide various kinds of communication content such as voice and data services. Generally, these communication systems are multiple access systems capable of supporting communication with multiple users by sharing available system resources (e.g., bandwidth and transmission power). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency-division multiple access (SC-FDMA) system, and a multi-carrier frequency division multiple access (MC-FDMA) system.

With appearance and spread of machine-to-machine (M2M) communication and a variety of devices such as smartphones and tablet PCs and technology demanding a large amount of data transmission, data throughput needed in a cellular network has rapidly increased. To satisfy such rapidly increasing data throughput, carrier aggregation technology, cognitive radio technology, etc. for efficiently employing more frequency bands and multiple input multiple output (MIMO) technology, multi-base station (BS) cooperation technology, etc. for raising data capacity transmitted on limited frequency resources have been developed.

In addition, a communication environment has evolved into increasing density of nodes accessible by a user at the periphery of the nodes. A node refers to a fixed point capable of transmitting/receiving a radio signal to/from the UE through one or more antennas. A communication system including high-density nodes may provide a better communication service to the UE through cooperation between the nodes.

### Disclosure

### Technical Problem

When a UE desires to access a network through another UE in a wireless communication system, a method for efficiently controlling the access is required.

In addition, when a UE desires to access a network through another UE serving as a relay, a method of providing a communication service to each UE without service interruption is required.

The technical objects that can be achieved through the present invention are not limited to what has been particularly described hereinabove and other technical objects not described herein will be more clearly understood by persons skilled in the art from the following detailed description.

### Technical Solution

In a wireless communication system, a user equipment (UE) may perform cell search or another UE (relay UE) search to access a network. The UE may be configured to first perform relay UE search prior to cell search. If the UE discovers the relay UE for a connection to a RAT cell supporting an indirect mode, the UE may establish a connection with the network through the relay UE.

According to an aspect of the present invention, provided herein is a method of establishing a connection with a network by a user equipment in a wireless communication system. The method includes: performing cell search using a first radio access technology (RAT) according to configuration information of the UE among the first RAT and a second RAT; upon failing to search for a cell using the first RAT, performing relay UE search according to the configuration information; and upon discovering a relay UE, starting to establish a connection with the relay UE.

In another aspect of the present invention, provided herein is a user equipment (UE) for establishing a connection with a network in a wireless communication system. The UE includes a radio frequency (RF) unit, and a processor configured to control the RF unit. The processor is configured to: perform cell search using a first radio access technology (RAT) according to configuration information of the UE among the first RAT and a second RAT; upon failing to search for a cell using the first RAT, perform relay UE search according to the configuration information; and upon discovering a relay UE, start to establish a connection with the relay UE.

In each aspect of the present invention, the first RAT may support an indirect connection to the network.

In each aspect of the present invention, upon failing to search for the relay UE, cell search using the second RAT may be performed.

In each aspect of the present invention, the configuration information may include information indicating that an indirect connection is prioritized over the second RAT.

In each aspect of the present invention, the first RAT may be evolved universal terrestrial radio access (E-UTRA) and the second RAT may be global system for mobile communication (GSM) or universal terrestrial radio access (UTRA).

In each aspect of the present invention, the configuration information may be provided to the UE.

The above technical solutions are merely some parts of the embodiments of the present invention and various embodiments into which the technical features of the present invention are incorporated can be derived and understood by persons skilled in the art from the following detailed description of the present invention.

### Advantageous Effects

According to the present invention, when a UE desires to access a network through another UE in a wireless communication system, network access through the UE or another UE may be controlled efficiently.

The present invention can provide a communication service without service interruption when a UE desires to access a network through another UE serving as a relay.

According to the present invention, uplink/downlink signals can be efficiently transmitted/received. Therefore, overall throughput of a radio communication system can be improved.

It will be appreciated by persons skilled in the art that that the effects that can be achieved through the present invention are not limited to what has been particularly described hereinabove and other advantages of the present invention will be more clearly understood from the following detailed description.

### Brief Description of the Drawings

The accompanying drawings, which are included to provide a further understanding of the invention, illustrate embodiments of the invention and together with the description serve to explain the principle of the invention.
FIG. 1 is a schematic diagram showing the structure of an evolved packet system (EPS) including an evolved packet core (EPC).
FIG. 2 is a diagram exemplarily illustrating architectures of a general E-UTRAN and EPC.
FIG. 3 is a diagram exemplarily illustrating the structure of a radio interface protocol in a control plane.
FIG. 4 is a diagram exemplarily illustrating the structure of a radio interface protocol in a user plane.
FIG. 5 is a diagram illustrating LTE (Long Term Evolution) protocol stacks for a user plane and a control plane.
FIG. 6 is a flow diagram illustrating a random access procedure.
FIG. 7 is a diagram illustrating a connection procedure in a radio resource control (RRC) layer.
FIG. 8 illustrates a default path (that is, default data path) through which two UEs perform communication in an EPS.
FIG. 9 illustrates a direct mode data path between two UEs based on ProSe.
FIG. 10 illustrates a data path through eNB between two UEs based on ProSe, especially a locally-routed data path.
FIG. 11 illustrates communication through a ProSe UE-to-Network relay.
FIG. 12 illustrates a procedure of performing, by a remote UE which is not served by E-UTRAN, direct communication through a UE-to-Network relay.
FIGS. 13 and 14 illustrate public safety direct discovery procedures.
FIG. 15 illustrates a communication method of a remote UE according to the present invention.
FIGS. 16 and 17 illustrate a connection procedure of a UE with a network according to the present invention.
FIG. 18 illustrates a node device applied to the proposal of the present invention.

### Mode for Carrying Out the Invention

Although the terms used in the present invention are selected from generally known and used terms while considering functions of the present invention, they may vary according to intention or customs of those skilled in the art or emergence of new technology. Some of the terms mentioned in the description of the present invention may have been selected by the applicant at his or her discretion, and in such cases the detailed meanings thereof will be described in relevant parts of the description herein. Thus, the terms used in this specification should be interpreted based on the substantial meanings of the terms and the whole content of this specification rather than their simple names or meanings.

The embodiments of the present invention described hereinbelow are combinations of elements and features of the present invention. The elements or features may be considered selective unless mentioned otherwise. Each element or feature may be practiced without being combined with other elements or features. Further, an embodiment of the present invention may be constructed by combining parts of the elements and/or features. Operation orders described in embodiments of the present invention may be rearranged. Some constructions or features of any one embodiment may be included in another embodiment and may be replaced with corresponding constructions or features of another embodiment.

In the description of the attached drawings, a detailed description of known procedures or steps of the present invention will be avoided lest it should obscure the subject matter of the present invention. In addition, procedures or steps that could be understood to those skilled in the art will not be described either.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a" (or "an"), "one", "the", etc. may include a singular representation and a plural representation in the context of the present invention (more particularly, in the context of the following claims) unless indicated otherwise in the specification or unless context clearly indicates otherwise.

The embodiments of the present invention can be supported by standard specifications disclosed for at least one of wireless access systems including an institute of electrical and electronics engineers (IEEE) 802.xx, a 3rd generation partnership project (3GPP) system, a 3GPP Long Term Evolution (3GPP LTE) system, and a 3GPP2 system. That is, steps or parts that are not described to clarify the technical features of the present invention may be explained with reference to the above standard specifications.

In addition, all terms set forth herein may be explained by the above standard specifications. For example, one or more of standard specifications, such as 3GPP TS 36.211, 3GPP TS 36.213, 3GPP TS 36.321, 3GPP TS 36.322, 3GPP TS 36.323, 3GPP TS 36.331, 3GPP TS 23.203, 3GPP TS 23.401, 3GPP TS 24.301, 3GPP TS 23.228, 3GPP TS 29.228, 3GPP TS 23.218, 3GPP TS 22.011, 3GPP TS 36.413 and 3GPP TS 23.303 may be referenced.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the invention.

Specific terms used for the embodiments of the present invention are provided to aid in understanding of the present invention. These specific terms may be replaced with other terms within the scope and spirit of the present invention.

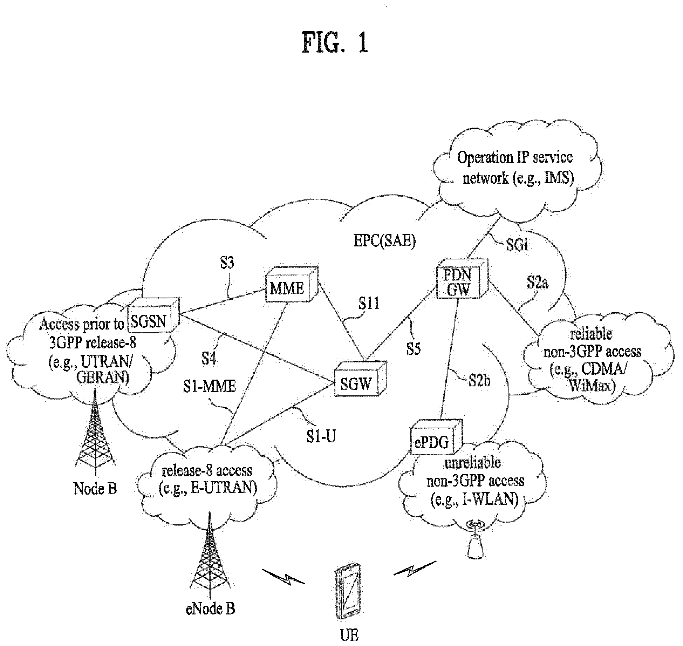

The terms used in this specification are defined as follows.
- IMS (IP Multimedia Subsystem or IP Multimedia Core Network Subsystem): An architectural framework for providing standardization for delivery of voice or other multimedia services over Internet protocol (IP).
- UMTS (Universal Mobile Telecommunications System): Global System for Mobile Communication (GSM)-based 3rd generation mobile communication technology developed by 3GPP.
- EPS (Evolved Packet System): A network system configured by an EPC (Evolved Packet Core), which is an Internet Protocol (IP)-based packet switched (PS) core network and an access network such as LTE, UTRAN, etc. The EPS is evolved from UMTS.
- NodeB: A base station of GERAN/UTRAN which is installed outdoors and has coverage of a macro cell scale.
- eNodeB/eNB: A base station of E-UTRAN which is installed outdoors and has coverage of a macro cell scale.
- UE (User Equipment): A user equipment. The UE may be referred to as a terminal, ME (Mobile Equipment), MS (Mobile Station), or the like. The UE may be a portable device such as a notebook computer, cellular phone, PDA (Personal Digital Assistant), smartphone, and multimedia device, or may be a nonportable device such as a PC (Personal Computer) and vehicle-mounted device. The term UE or terminal in the description of MTC may refer to an MTC device.
- HNB (Home NodeB): A base station of a UMTS network. The HNB is installed indoors and has coverage of a micro cell scale.
- HeNB (Home eNodeB): A base station of an EPS network. The HeNB is installed indoors and has coverage of a micro cell scale.
- MME (Mobility Management Entity): A network node of the EPS network performing functions of Mobility Management (MM) and Session Management (SM).
- PDN-GW (Packet Data Network-Gateway)/PGW/P-GW: A network node of the EPS network performing functions of UE IP address allocation, packet screening and filtering, and charging data collection.
- SGW (Serving Gateway)/S-GW: A network node of the EPS network performing functions of mobility anchor, packet routing, idle mode packet buffering, and triggering of the MME paging the UE.
- PCRF (Policy and Charging Rule Function): A network node of the EPS network making a policy decision for dynamically applying a differentiated QoS and charging policy on a service flow basis.
- OMA DM (Open Mobile Alliance Device Management): A protocol designed for management of mobile devices such as a cellular phone, a PDA, and a portable computer, that performs functions of device configuration, firmware upgrade, and error report.
- OAM (Operation Administration and Maintenance): A group of network management functions that provides network defect indication, performance information, and data and diagnosis functions.
- NAS (Non-Access Stratum): An upper stratum of a control plane between the UE and the MME. The NAS is a functional layer for signaling between a UE and a core network and exchange of a traffic message between the UE and the core network in LTE/UMTS protocol stack. The NAS mainly functions to support UE mobility and a session management procedure for establishing and maintaining IP connection between a UE and a P-GW.
- EMM (EPS Mobility Management): A sub-layer of a NAS layer, that may be in either an "EMM-Registered" or "EMM-Deregistered" state depending on whether a UE is attached to or detached from a network.
- ECM (EMM Connection Management) connection: A signaling connection for exchange of a NAS message, established between the UE and an MME. The ECM connection is a logical connection consisting of an RRC connection between the UE and an eNB and an S1 signaling connection between the eNB and the MME. If the ECM connection is established/terminated, the RRC connection and the S1 signaling connection are all established/terminated as well. To the UE, an established ECM connection means having an RRC connection established with the eNB and, to the MME, the established ECM connection means having an SI signaling connection established with the eNB. Depending on whether a NAS signaling connection, i.e., the ECM connection, is established, ECM may be in either "ECM-Connected" or "ECM-Idle" state.
- AS (Access-Stratum): This includes a protocol stack between the UE and a wireless (or access) network and is in charge of data and network control signal transmission.
- NAS configuration MO (Management Object): An MO used in the process of configuring parameters related to NAS functionality for the UE.
- PDN (Packet Data Network): A network where a server (e.g., an MMS (Multimedia Messaging Service) server, a WAP (Wireless Application Protocol) server, etc.) supporting a specific service is located.
- PDN connection: A logical connection between a PDN and a UE represented by one IP address (one IPv4 address and/or one IPv6 prefix).
- APN (Access Point Name): A text sequence for indicating or identifying a PDN. A requested service or network is accessed through a specific P-GW. The APN means a predefined name (text sequence) in a network so as to discover this P-GW. (e.g., internet.mnc012.mcc345.gprs).
- RAN (Radio Access Network): A unit including a NodeB, an eNodeB and an RNC (Radio Network Controller) for controlling the NodeB and the eNodeB in a 3GPP network. The RAN is present between UEs and provides connection to the core network.
- HLR (Home Location Register)/HSS(Home Subscriber Server): A database containing subscriber information of a 3GPP network. The HSS can perform functions such as configuration storage, identity management and user state storage.
- PLMN (Public Land Mobile Network): A network configured for the purpose of providing mobile communication services to individuals. This network can be configured per operator.
- ANDSF (Access Network Discovery and Selection Function): One network entity that provides a policy to discover and select access that the UE can use with respect to each service provider.
- EPC path (or infrastructure data path): A user plane communication path through an EPC.
- E-RAB (E-UTRAN Radio Access Bearer): Concatenation of an S1 bearer and a data radio bearer corresponding to the S1 bearer. If the E-RAB is present, there is one-to-one mapping between the E-RAB and an EPS bearer of a NAS.
- GTP (GPRS Tunneling Protocol): A group of IP-based communication protocols used to carry a general packet radio service (GPRS) within GSM, UMTS, and LTE networks. In 3GPP architectures, GTP and proxy mobile IPv6 based interfaces are specified on various interface points. The GTP can be decomposed into some protocols (e.g., GTP-C, GTP-U, and GTP'). GTP-C is used within a GPRS core network for signaling between gateway GPRS support nodes (GGSN) and serving GPRS support nodes (SGSN). GTP-C allows the SGSN to activate a session on a user's behalf (e.g., PDN context activation), deactivate the same session, adjust quality of service parameters, or update a session for a subscriber that has just arrived from another SGSN. GTP-U is used to carry user data within the GPRS core network and between a radio access network and a core network. FIG. 1 is a schematic diagram showing the structure of an evolved packet system (EPS) including an evolved packet core (EPC).
- Proximity Services (or ProSe Service or Proximity based Service): a service that enables discovery between physically proximate devices, mutual direct communication through a base station, or communication through the third party device. Here, user plane data are exchanged through a direct data path without through a 3GPP core network (for example, EPC).
- ProSe Communication: communication between two or more ProSe-enabled UEs in proximity by means of a ProSe Communication path. Unless explicitly stated otherwise, the term "ProSe Communication" refers to any/all of the following: ProSe E-UTRA Communication, ProSe-assisted WLAN direct communication between two UEs, ProSe Group Communication and ProSe Broadcast Communication.
- ProSe E-UTRA Communication: ProSe Communication using a ProSe E-UTRA Communication path.
- ProSe-assisted WLAN direct communication: ProSe Communication using a direct communication path.
- ProSe Communication path: communication path supporting ProSe Communication. The ProSe E-UTRA Communication path could be established between the ProSe-enabled UEs using E-UTRA, or via local eNB(s). The ProSe-assisted WLAN direct communication path may be established directly between the ProSe-enabled UEs using WLAN.
- EPC Path (or infrastructure data path): the user plane communication path through EPC.
- ProSe Discovery: a process that identifies that a UE that is ProSe-enabled is in proximity of another, using E-UTRA.
- ProSe Group Communication: one-to-many ProSe Communication, which uses a common communication path, between more than two ProSe-enabled UEs in proximity.
- ProSe UE-to-Network Relay: ProSe-enabled Public Safety UE that acts as a communication relay between a ProSe-enabled UE and the ProSe-enabled network using E-UTRA.
- Remote UE: This is a Prose-enabled UE connected to EPC network, i.e. perform communication with a PDN, through Prose UE-to-Network Relay without service from E-UTRAN.
- ProSe UE-to-UE relay: a form of relay in which a ProSe-enabled UE acts as a ProSe Communication relay between two other ProSe-enabled UEs.
- ProSe-enabled Network: a network that supports ProSe Discovery, ProSe Communication and/or ProSe-assisted WLAN direct communication. Hereinafter, the ProSe-enabled network may simply be referred to as a network.
- ProSe-enabled UE: a UE that supports ProSe Discovery, ProSe Communication and/or ProSe-assisted WLAN direct communication. Hereinafter, ProSe-enabled UE may simply be referred to as a UE.

Model A: involves one UE announcing "I am here". This model defines two roles for the ProSe-enabled UEs that are participating in ProSe Direct Discovery.
> Announcing UE: The UE announces certain information that could be used by UEs in proximity that have permission to discover.
> Monitoring UE: The UE that monitors certain information of interest in proximity of announcing UEs.

Model B: involves one UE asking "who is there" and/or "are you there". This model defines two roles for the ProSe-enabled UEs that are participating in ProSe Direct Discovery.
> Discoverer UE: The UE transmits a request containing certain information about what it is interested to discover.
> Discoveree UE: The UE that receives the request message can respond with some information related to the discoverer UE's request.
   - Proximity: proximity is determined when given proximity criteria are fulfilled.

User service description (USD): in the USD (see 3GPP TS 26.346), the application/service layer provides for each service the TMGI (Temporary Mobile Group Identity), the session start and end time, the frequencies and the MBMS service area identities (MBMS SAIs, see definition in section 15.3 of 3GPP TS 23.003) belonging to the MBMS service area (see definition in 3GPP TS 23.246).

The EPC is a core element of system architecture evolution (SAE) for improving performance of 3GPP technology. SAE corresponds to a research project for determining a network structure supporting mobility between various types of networks. For example, SAE aims to provide an optimized packet-based system for supporting various radio access technologies and providing an enhanced data transmission capability.

Specifically, the EPC is a core network of an IP mobile communication system for 3GPP LTE and can support real-time and non-real-time packet-based services. In conventional mobile communication systems (i.e. second-generation or third-generation mobile communication systems), functions of a core network are implemented through a circuit-switched (CS) sub-domain for voice and a packet-switched (PS) sub-domain for data. However, in a 3GPP LTE system which is evolved from the third generation communication system, CS and PS sub-domains are unified into one IP domain. That is, in 3GPP LTE, connection of terminals having IP capability can be established through an IP-based business station (e.g., an eNodeB (evolved Node B)), EPC, and an application domain (e.g., IMS). That is, the EPC is an essential structure for end-to-end IP services.

The EPC may include various components. FIG. 1 shows some of the components, namely, a serving gateway (SGW), a packet data network gateway (PDN GW), a mobility management entity (MME), a serving GPRS (general packet radio service) supporting node (SGSN) and an enhanced packet data gateway (ePDG).

The SGW (or S-GW) operates as a boundary point between a radio access network (RAN) and a core network and maintains a data path between an eNodeB and the PDN GW. When. When a terminal moves over an area served by an eNodeB, the SGW functions as a local mobility anchor point. That is, packets. That is, packets may be routed through the SGW for mobility in an evolved UMTS terrestrial radio access network (E-UTRAN) defined after 3GPP release-8. In addition, the SGW may serve as an anchor point for mobility of another 3GPP network (a RAN defined before 3GPP release-8, e.g., UTRAN or GERAN (global system for mobile communication (GSM)/enhanced data rates for global evolution (EDGE) radio access network).

The PDN GW (or P-GW) corresponds to a termination point of a data interface for a packet data network. The PDN GW may support policy enforcement features, packet filtering and charging support. In addition, the PDN GW may serve as an anchor point for mobility management with a 3GPP network and a non-3GPP network (e.g., an unreliable network such as an interworking wireless local area network (I-WLAN) and a reliable network such as a code division multiple access (CDMA) or WiMax network.

Although the SGW and the PDN GW are configured as separate gateways in the example of the network structure of FIG. 1, the two gateways may be implemented according to a single gateway configuration option.

The MME performs signaling and control functions for supporting access of a UE for network connection, network resource allocation, tracking, paging, roaming and handover. The MME controls control plane functions associated with subscriber and session management. The MME manages numerous eNodeBs and signaling for selection of a conventional gateway for handover to other 2G/3G networks. In addition, the MME performs security procedures, terminal-to-network session handling, idle terminal location management, etc.

The SGSN handles all packet data such as mobility management and authentication of a user for other 3GPP networks (e.g., a GPRS network).

The ePDG serves as a security node for a non-3GPP network (e.g., an I-WLAN, a Wi-Fi hotspot, etc.).

As described above with reference to FIG. 1, a terminal having IP capabilities may access an IP service network (e.g., an IMS) provided by an operator via various elements in the EPC not only based on 3GPP access but also on non-3GPP access.

Additionally, FIG. 1 shows various reference points (e.g. S1-U, S1-MME, etc.). In 3GPP, a conceptual link connecting two functions of different functional entities of an E-UTRAN and an EPC is defined as a reference point. Table 1 is a list of the reference points shown in FIG. 1. Various reference points may be present in addition to the reference points in Table 1 according to network structures.

**Table 1**

| Reference Point | Description |
|---|---|
| S1-MME | Reference point for the control plane protocol between E-UTRAN and MME. |
| S1-U | Reference point between E-UTRAN and Serving GW for the per bearer user plane tunneling and inter eNB path switching during handover. |
| S3 | It enables user and bearer information exchange for inter 3GPP access network mobility in idle and/or active state. This reference point can be used intra-PLMN or inter-PLMN (e.g. in the case of Inter-PLMN HO). |
| S4 | It provides related control and mobility support between GPRS Core and the 3GPP Anchor function of Serving GW. In addition, if Direct Tunnel is not established, it provides the user plane tunnelling. |
| S5 | It provides user plane tunnelling and tunnel management between Serving GW and PDN GW. It is used for Serving GW relocation due to UE mobility and if the Serving GW needs to connect to a non-collocated PDN GW for the required PDN connectivity. |
| S11 | Reference point between MME and Serving GW. |
| SGi | It is the reference point between the PDN GW and the packet data network. Packet data network may be an operator external public or private packet data network or an intra operator packet data network, e.g. for provision of IMS services. This reference point corresponds to Gi for 3GPP accesses.) |

Among the reference points shown in FIG. 1, S2a and S2b correspond to non-3GPP interfaces. S2a is a reference point which provides reliable non-3GPP access and related control and mobility support between PDN GWs to a user plane. S2b is a reference point which provides related control and mobility support between the ePDG and the PDN GW to the user plane.

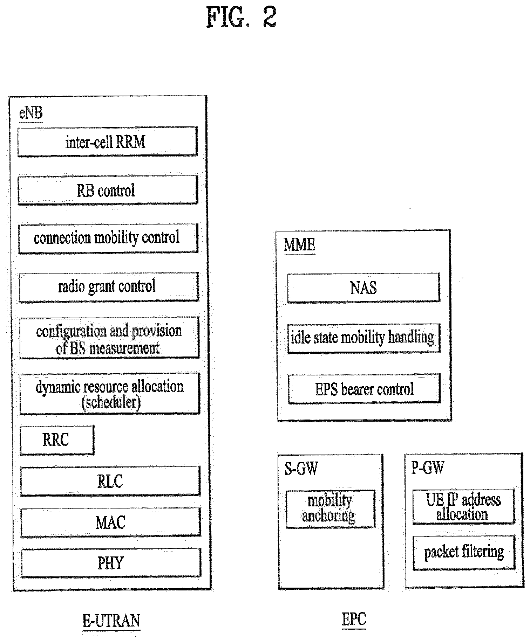

FIG. 2 is a diagram exemplarily illustrating architectures of a typical E-UTRAN and EPC.

As shown in the figure, while radio resource control (RRC) connection is activated, an eNodeB may perform routing to a gateway, scheduling transmission of a paging message, scheduling and transmission of a broadcast channel (BCH), dynamic allocation of resources to a UE on uplink and downlink, configuration and provision of eNodeB measurement, radio bearer control, radio admission control, and connection mobility control. In the EPC, paging generation, LTE_IDLE state management, ciphering of the user plane, SAE bearer control, and ciphering and integrity protection of NAS signaling.

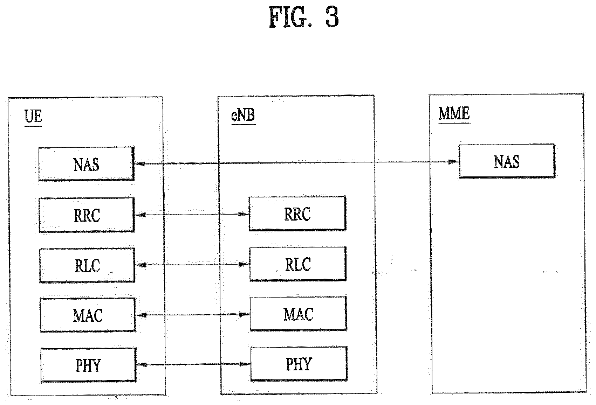

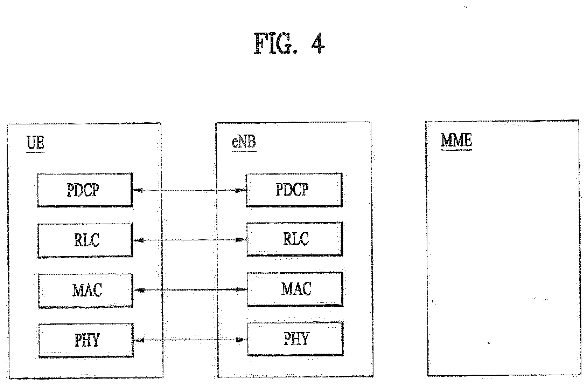

FIG. 3 is a diagram exemplarily illustrating the structure of a radio interface protocol in a control plane between a UE and an eNB, and FIG. 4 is a diagram exemplarily illustrating the structure of a radio interface protocol in a user plane between the UE and the eNB.

The radio interface protocol is based on the 3GPP wireless access network standard. The radio interface protocol horizontally includes a physical layer, a data link layer, and a networking layer. The radio interface protocol is divided into a user plane for transmission of data information and a control plane for delivering control signaling which are arranged vertically.

The protocol layers may be classified into a first layer (LI), a second layer (L2), and a third layer (L3) based on the three sublayers of the open system interconnection (OSI) model that is well known in the communication system.

Hereinafter, description will be given of a radio protocol in the control plane shown in FIG. 3 and a radio protocol in the user plane shown in FIG. 4.

The physical layer, which is the first layer, provides an information transfer service using a physical channel. The physical channel layer is connected to a medium access control (MAC) layer, which is a higher layer of the physical layer, through a transport channel. Data is transferred between the physical layer and the MAC layer through the transport channel. Transfer of data between different physical layers, i.e., a physical layer of a transmitter and a physical layer of a receiver is performed through the physical channel.

The physical channel consists of a plurality of subframes in the time domain and a plurality of subcarriers in the frequency domain. One subframe consists of a plurality of symbols in the time domain and a plurality of subcarriers. One subframe consists of a plurality of resource blocks. One resource block consists of a plurality of symbols and a plurality of subcarriers. A Transmission Time Interval (TTI), a unit time for data transmission, is 1 ms, which corresponds to one subframe.

According to 3GPP LTE, the physical channels present in the physical layers of the transmitter and the receiver may be divided into data channels corresponding to Physical Downlink Shared Channel (PDSCH) and Physical Uplink Shared Channel (PUSCH) and control channels corresponding to Physical Downlink Control Channel (PDCCH), Physical Control Format Indicator Channel (PCFICH), Physical Hybrid-ARQ Indicator Channel (PHICH) and Physical Uplink Control Channel (PUCCH).

The second layer includes various layers. First, the MAC layer in the second layer serves to map various logical channels to various transport channels and also serves to map various logical channels to one transport channel. The MAC layer is connected with an RLC layer, which is a higher layer, through a logical channel. The logical channel is broadly divided into a control channel for transmission of information of the control plane and a traffic channel for transmission of information of the user plane according to the types of transmitted information.

The radio link control (RLC) layer in the second layer serves to segment and concatenate data received from a higher layer to adjust the size of data such that the size is suitable for a lower layer to transmit the data in a radio interface.

The Packet Data Convergence Protocol (PDCP) layer in the second layer performs a header compression function of reducing the size of an IP packet header which has a relatively large size and contains unnecessary control information, in order to efficiently transmit an IP packet such as an IPv4 or IPv6 packet in a radio interface having a narrow bandwidth. In addition, in LTE, the PDCP layer also performs a security function, which consists of ciphering for preventing a third party from monitoring data and integrity protection for preventing data manipulation by a third party.

The Radio Resource Control (RRC) layer, which is located at the uppermost part of the third layer, is defined only in the control plane, and serves to configure radio bearers (RBs) and control a logical channel, a transport channel, and a physical channel in relation to reconfiguration and release operations. The RB represents a service provided by the second layer to ensure data transfer between a UE and the E-UTRAN.

If an RRC connection is established between the RRC layer of the UE and the RRC layer of a wireless network, the UE is in the RRC Connected mode. Otherwise, the UE is in the RRC Idle mode.

Hereinafter, description will be given of the RRC state of the UE and an RRC connection method. The RRC state refers to a state in which the RRC of the UE is or is not logically connected with the RRC of the E-UTRAN. The RRC state of the UE having logical connection with the RRC of the E-UTRAN is referred to as an RRC_CONNECTED state. The RRC state of the UE which does not have logical connection with the RRC of the E-UTRAN is referred to as an RRC_IDLE state. A UE in the RRC_CONNECTED state has RRC connection, and thus the E-UTRAN may recognize presence of the UE in a cell unit. Accordingly, the UE may be efficiently controlled. On the other hand, the E-UTRAN cannot recognize presence of a UE which is in the RRC_IDLE state. The UE in the RRC_IDLE state is managed by a core network in a tracking area (TA) which is an area unit larger than the cell. That is, for the UE in the RRC_IDLE state, only presence or absence of the UE is recognized in an area unit larger than the cell. In order for the UE in the RRC_IDLE state to be provided with a usual mobile communication service such as a voice service and a data service, the UE should transition to the RRC CONNECTED state. A TA is distinguished from another TA by a tracking area identity (TAI) thereof. A UE may configure the TAI through a tracking area code (TAC), which is information broadcast from a cell.

When the user initially turns on the UE, the UE searches for a proper cell first. Then, the UE establishes RRC connection in the cell and registers information thereabout in the core network. Thereafter, the UE stays in the RRC_IDLE state. When necessary, the UE staying in the RRC_IDLE state selects a cell (again) and checks system information or paging information. This operation is called camping on a cell. Only when the UE staying in the RRC_IDLE state needs to establish RRC connection, does the UE establish RRC connection with the RRC layer of the E-UTRAN through the RRC connection procedure and transition to the RRC_CONNECTED state. The UE staying in the RRC_IDLE state needs to establish an RRC connection in many cases. For example, the cases may include an attempt of a user to make a phone call, an attempt to transmit data, or transmission of a response message after reception of a paging message from the E-UTRAN.

The non-access stratum (NAS) layer positioned over the RRC layer performs functions such as session management and mobility management.

Hereinafter, the NAS layer shown in FIG. 3 will be described in detail.

The ESM (EPS Session Management) belonging to the NAS layer performs functions such as default bearer management and dedicated bearer management to control a UE to use a PS service from a network. A default bearer resource is assigned from the network during initial access to a specific Packet Data Network (PDN). In this case, the network allocates an available IP to the UE to allow the UE to use a data service. The network also allocates QoS of a default bearer to the UE. LTE supports two kinds of bearers. One bearer is a bearer having characteristics of guaranteed bit rate (GBR) QoS for guaranteeing a specific bandwidth for transmission and reception of data, and the other bearer is a non-GBR bearer which has characteristics of best effort QoS without guaranteeing a bandwidth. The default bearer is assigned to a non-GBR bearer. The dedicated bearer may be assigned a bearer having QoS characteristics of GBR or non-GBR.

A bearer allocated to the UE by the network is referred to as an evolved packet service (EPS) bearer. When the EPS bearer is allocated to the UE, the network assigns one ID. This ID is called an EPS bearer ID. One EPS bearer has QoS characteristics of a maximum bit rate (MBR) and/or a guaranteed bit rate (GBR).

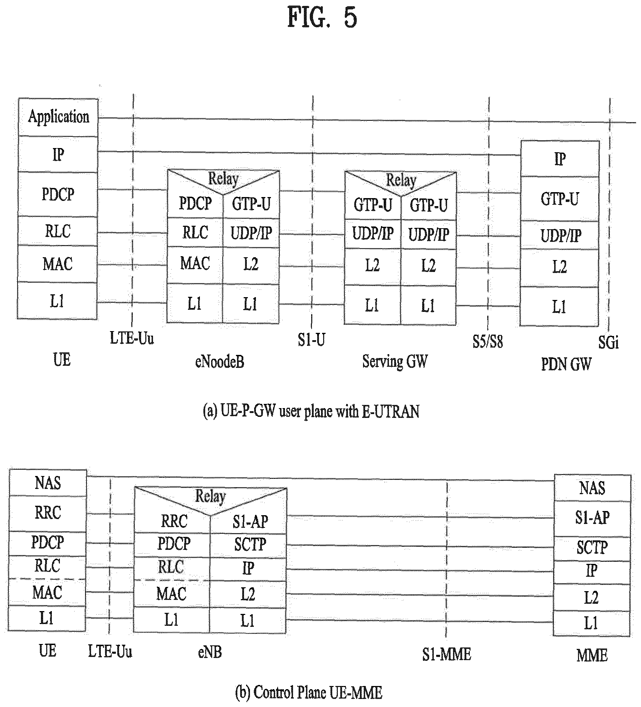

FIG. 5 illustrates LTE protocol stacks for a user plane and a control plane. FIG. 5(a) illustrates user plane protocol stacks over UE-eNB-SGW-PGW-PDN and FIG. 5(b) illustrates control plane protocol stacks over UE-eNB-MME-SGW-PGW. Functions of key layers of the protocol stacks will now be briefly described below.

Referring to FIG. 5(a), a GTP-U protocol is used to forward user IP packets over an S1-U/S5/X2 interface. If a GTP tunnel is established to forward data during LTE handover, an end marker packet is transferred to the GTP tunnel as the last packet.

Referring to FIG. 5(b), an S1-AP protocol is applied to an S1-MME interface. The S1-AP protocol supports functions such as S1 interface management, E-RAB management, NAS signaling delivery, and UE context management. The S1-AP protocol transfers an initial UE context to the eNB in order to set up E-RAB(s) and then manages modification or release of the UE context. A GTP-C protocol is applied to S11/S5 interfaces. The GTP-C protocol supports exchange of control information for generation, modification, and termination of GTP tunnel(s). The GTP-C protocol generates data forwarding tunnels in the case of LTE handover.

A description of the protocol stacks and interfaces illustrated in FIGs. 3 and 4 is applicable to the same protocol stacks and interfaces illustrated in FIG. 5.

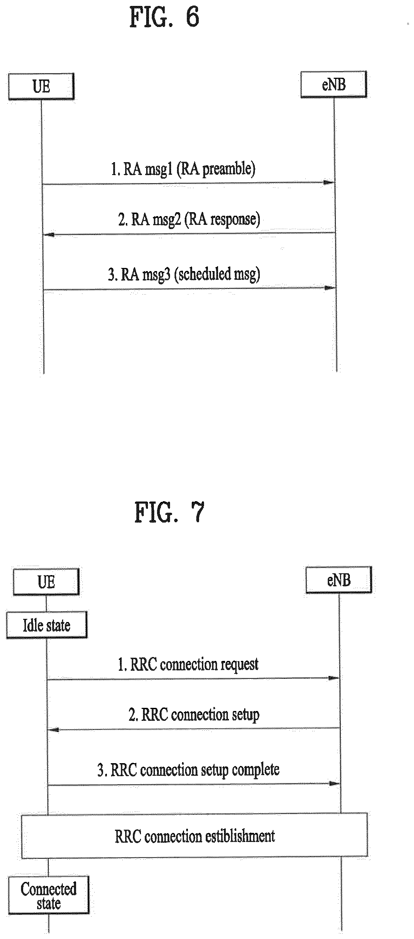

FIG. 6 is a flowchart illustrating a random access procedure in 3GPP LTE.

The random access procedure is used for a UE to obtain UL synchronization with a base station or to be assigned a UL radio resource.

The UE receives a root index and a physical random access channel (PRACH) configuration index from an eNB. Each cell has 64 candidate random access preambles defined by a Zadoff-Chu (ZC) sequence. The root index is a logical index used for the UE to generate 64 candidate random access preambles.

Transmission of a random access preamble is limited to a specific time and frequency resources for each cell. The PRACH configuration index indicates a specific subframe and preamble format in which transmission of the random access preamble is possible.

The random access procedure, in particular, a contention-based random access procedure, includes the following three steps. Messages transmitted in the following steps 1, 2, and 3 are referred to as msg1, msg2, and msg4, respectively.
> 1. The UE transmits a randomly selected random access preamble to the eNodeB. The UE selects a random access preamble from among 64 candidate random access preambles and the UE selects a subframe corresponding to the PRACH configuration index. The UE transmits the selected random access preamble in the selected subframe.
> 2. Upon receiving the random access preamble, the eNB sends a random access response (RAR) to the UE. The RAR is detected in two steps. First, the UE detects a PDCCH masked with a random access (RA)-RNTI. The UE receives an RAR in a MAC (medium access control) PDU (protocol data unit) on a PDSCH indicated by the detected PDCCH. The RAR includes timing advance (TA) information indicating timing offset information for UL synchronization, UL resource allocation information (UL grant information), and a temporary UE identifier (e.g., a temporary cell-RNTI (TC-RNTI)).
> 3. The UE may perform UL transmission according to resource allocation information (i.e., scheduling information) and a TA value in the RAR. HARQ is applied to UL transmission corresponding to the RAR. Accordingly, after performing UL transmission, the UE may receive reception response information (e.g., a PHICH) corresponding to UL transmission.

FIG. 7 illustrates a connection procedure in a radio resource control (RRC) layer.

As shown in FIG. 7, the RRC state is set according to whether or not RRC connection is established. An RRC state indicates whether or not an entity of the RRC layer of a UE has logical connection with an entity of the RRC layer of an eNB. An RRC state in which the entity of the RRC layer of the UE is logically connected with the entity of the RRC layer of the eNB is called an RRC connected state. An RRC state in which the entity of the RRC layer of the UE is not logically connected with the entity of the RRC layer of the eNB is called an RRC idle state.

A UE in the connected state has RRC connection, and thus the E-UTRAN may recognize presence of the UE in a cell unit. Accordingly, the UE may be efficiently controlled. On the other hand, the eNB cannot recognize presence of a UE which is in the idle state. The UE in the idle state is managed by the core network in a tracking area unit which is an area unit larger than the cell. The tracking area is a unit of a set of cells. That is, for the UE which is in the idle state, only presence or absence of the UE is recognized in a larger area unit. In order for the UE in the idle state to be provided with a usual mobile communication service such as a voice service and a data service, the UE should transition to the connected state.

When the user initially turns on the UE, the UE searches for a proper cell first, and then stays in the idle state. Only when the UE staying in the idle state needs to establish RRC connection, does the UE establish RRC connection with the RRC layer of the eNB through the RRC connection procedure and then transition to the RRC connected state.

The UE staying in the idle state needs to establish RRC connection in many cases. For example, the cases may include an attempt of a user to make a phone call, an attempt to transmit data, or transmission of a response message after reception of a paging message from the E-UTRAN.

In order for the UE in the idle state to establish RRC connection with the eNodeB, the RRC connection procedure needs to be performed as described above. The RRC connection procedure is broadly divided into transmission of an RRC connection request message from the UE to the eNB, transmission of an RRC connection setup message from the eNB to the UE, and transmission of an RRC connection setup complete message from the UE to eNB, which are described in detail below with reference to FIG. 7.
> 1. When the UE in the idle state desires to establish RRC connection for reasons such as an attempt to make a call, a data transmission attempt, or a response of the eNB to paging, the UE transmits an RRC connection request message to the eNB first.
> 2. Upon receiving the RRC connection request message from the UE, the eNB accepts the RRC connection request of the UE when the radio resources are sufficient, and then transmits an RRC connection setup message, which is a response message, to the UE.
> 3. Upon receiving the RRC connection setup message, the UE transmits an RRC connection setup complete message to the eNB.

Only when the UE successfully transmits the RRC connection setup complete, message, does the UE establish RRC connection with the eNB and transition to the RRC connected mode.

A ProSe service means a service that enables discovery and mutual direct communication between physically proximate devices or communication through a third party device.

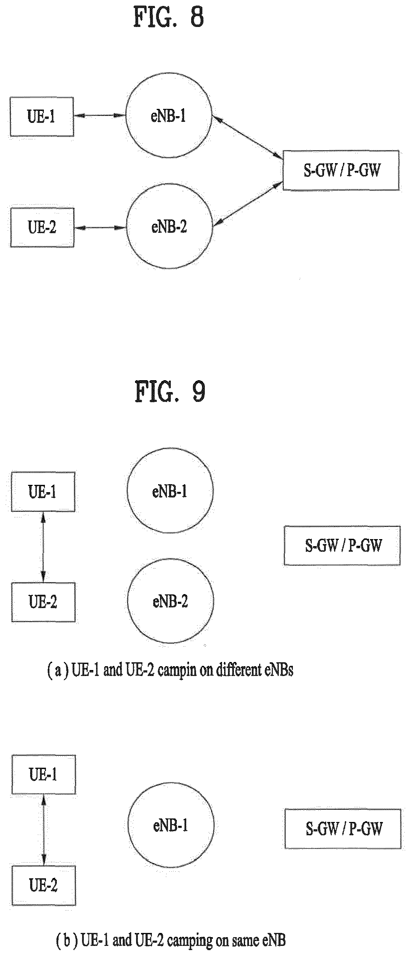

FIG. 8 illustrates a default path (that is, default data path) through which two UEs perform communication in an EPS. This default path passes through an eNB and a core network (e.g., EPC), which are managed by an operator. In the present invention, this path will be referred to as an infrastructure data path or EPC path. Also, communication through this infrastructure data path will be referred to as infrastructure communication.

FIG. 9 illustrates a direct mode data path between two UEs based on ProSe. This direct mode data path does not pass through an eNB and a core network (e.g., EPC), which are managed by an operator. FIG. 9(a) illustrates that UE-1 and UE-2 transmit and receive data to and from each other through the direct mode data path while camping on their respective eNBs different from each other, and FIG. 9(b) illustrates that two UEs which are camping on the same eNB transmit and receive data to and from each other through the direct mode data path.

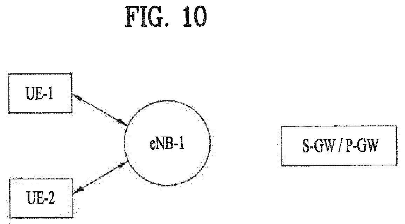

FIG. 10 illustrates a data path through eNB between two UEs based on ProSe, especially a locally-routed data path. This data path through eNB does not pass through a core network (e.g., EPC) managed by an operator.

In the present invention, the data path described in FIGS. 9 and 10 will be referred to as a direct data path, a data path for proximity service, or a proximity service based data path or proximity service communication path. Also, the direct data communication will be referred to as direct communication or proximity service communication or proximity service based communication.

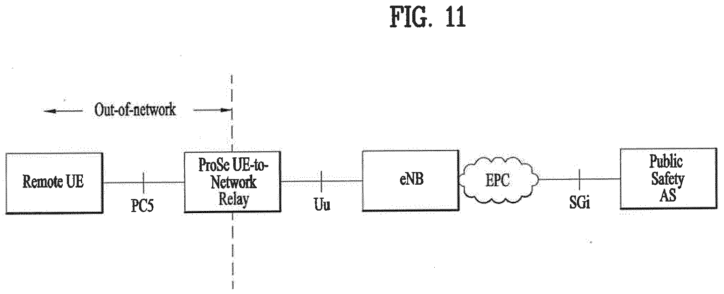

FIG. 11 illustrates communication through a ProSe UE-to-Network relay. A remote UE may perform communication with an application server (AS) or take part in group communication by receiving connectivity to an EPC through a UE-to-Network relay. As a result, a UE (e.g., remote UE of FIG. 11) which is out of network coverage (which is not served by E-UTRAN) may receive a connection service to a network through a ProSe UE-Network relay. In addition, if a UE which is inside network coverage uses a ProSe UE-to-Network relay, since the UE may perform communication by using only a power to reach a relay close thereto rather than an eNB which is distant, battery saving may be achieved.

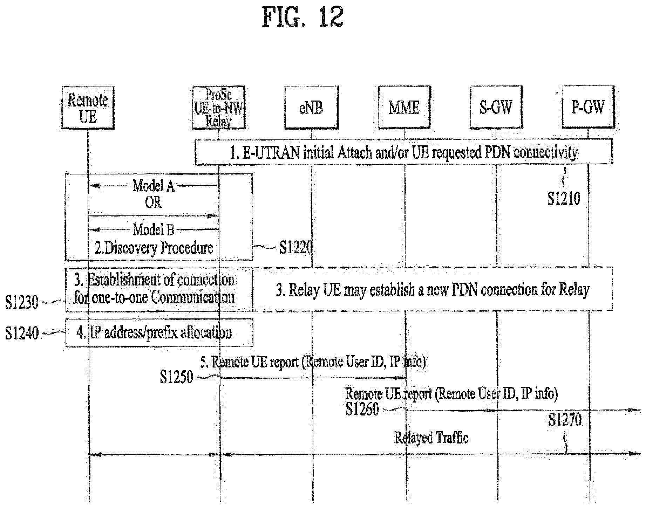

FIG. 12 illustrates a procedure of performing direct communication through a UE-to-Network relay in a remote UE which is not served by E-UTRAN. A UE which may be operated through a ProSe-UE-to-Network relay may create a PDN connection to provide a relay traffic to the remote UE by accessing the network. The PDN connection which supports a UE-to-Network relay is only used to support a relay traffic to the remote UE.

First of all, the relay UE generates a PDN connection through initial access to the E-UTRAN (S1210), and acquires IPv6 prefix through a prefix delegation function in case of IPv6. Subsequently, the relay UE performs a discovery procedure with the UE according to the model A or B together with the remote UE (S1220). The remote UE selects a relay UE discovered by the discovery procedure and establishes one-to-one direct connection (S1230). If there is no PDN connection according to relay UE ID or additional PDN connection for relay operation is required, the relay UE initiates a new PDN connection procedure (S1230).

Subsequently, IPv6 prefix or IPv4 address is allocated to the remote UE (S1240), whereby an uplink/downlink relay operation is started. If IPv6 prefix is allocated, an IPv6 stateless address auto-configuration procedure is performed, which includes router solicitation signaling from the remote UE to the relay UE and router advertisement signaling from the relay UE to the remote UE. If the IPv6 address is allocated, an IPv4 address allocation using DHCPv4 is performed, which includes DHCPv4 discovery signaling (from the remote UE to the relay UE), DHCPv4 offer signaling (from the relay UE to the remote UE), DHCPv4 request signaling (from the remote UE to the relay UE), and DHCPv4 ACK signaling (from the relay UE to the remote UE).

Subsequently, the relay UE performs a remote UE reporting procedure of notifying an MME that the remote UE has been connected thereto (S1250). The MME notifies that a new remote UE has been connected by performing the remote UE reporting procedure for SGW and PGW (S1260). Then, the remote UE performs communication with the network through the relay UE (S1270). Details of the procedure of generating direct connection will be understood with reference to 3GPP TS 23.303.

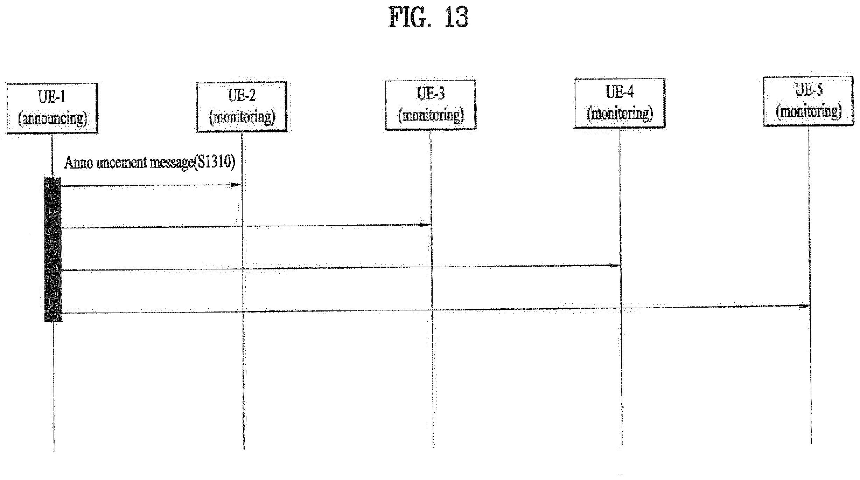

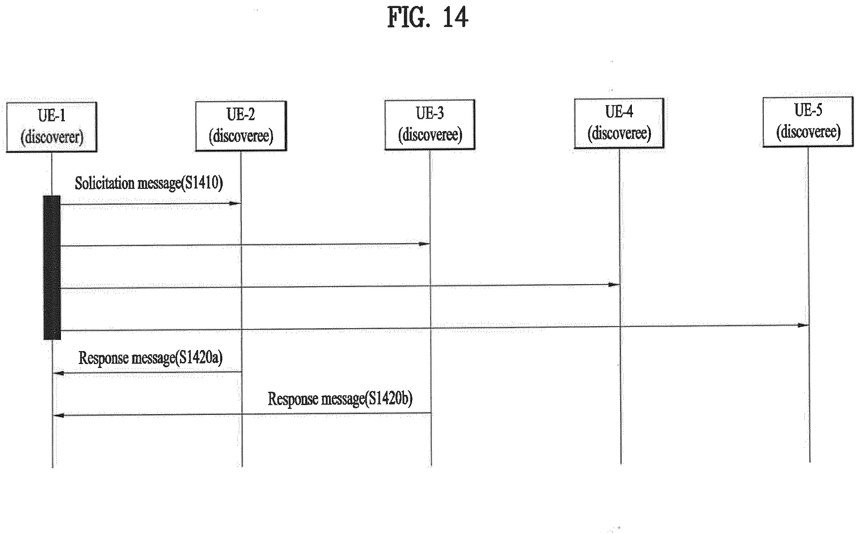

Both Model A discovery and Model B discovery are supported: Model A uses a single discovery protocol message (announcement) and Model B uses two discovery protocol messages (solicitation and response). FIGS. 13 and 14 illustrate public safety direct discovery procedures. Particularly, FIG. 13 illustrates a public safety discovery procedure according to Model A and FIG. 14 illustrates a public safety discovery procedure according to Model B.

For relay discovery additional information, Model A is used. Referring to FIG. 13, for UE-to-network relay discovery, a ProSe UE-to-network relay transmits a UE-to-network relay discovery announcement message (S1310). For group member discovery, an announcing UE transmits a group member discovery announcement message (S1310). If a UE belongs to one or more discovery groups, the UE transmits multiple group member discovery announcement messages (Model A). For relay discovery additional information, the ProSe UE-to-network relay transmits a relay discovery additional information message (S1310).

Referring to FIG. 14, for UE-to-network relay discovery, a remote UE transmits a UE-to-network relay discovery solicitation message (S1410) and Prose UE-to-network relays that match values of a relay service code contained in the solicitation message respond to the remote UE with a UE-to-network relay discovery response message (S1420). For group member discovery, a discoverer UE transmits a group member discovery solicitation message (S1410) and discoveree UEs that match values of parameters contained in the solicitation message based on a discovery group ID respond to the discoverer UE with a group member discovery response message (S1420).

Communication between a UE and a UE is referred to as 'D2D communication'. LTE based 'D2D communication' may be implemented using a PC5 interface. The PC5 interface may be used between a remote UE and a relay UE.

Massive mobile data traffics have been generated in a mobile communication network for recent several years due to the development and fast market penetration of smartphones, and a communication traffic type has been remarkably changed from the legacy peer-to-peer communication to communication in which applications perform signal exchange autonomously. In a mobile communication system of high speed and high capacity, traffic congestion control is important in maintaining service stability in various statuses. Also, when a major disaster such as a big earthquake is generated, a mobile data traffic may be increased to an unexpected level and the network may be operated in error. Therefore, the mobile communication system needs a mechanism for preventing an unexpected high traffic from occurring before the unexpected high traffic is generated. To make sure of successful communication for emergency call and/or disaster board, a traffic congestion control mechanism is required to reduce a call which is not important/has a low priority to allow network resources for a call which is important/has a high priority to be available for many users if possible. In 3GPP, a series of traffic congestion mechanisms have been standardized to control mobile communication access for a network. One control mechanism, which is standardized as a part of the 3G (UMTS) specification and is widely used in LTE, is also called "access class (AC)" which is control technology using priority identifier data stored in a UE. Hereinafter, a conventional access control mechanism will be described in more detail.

Under certain circumstances, it could be desirable to prevent UE users from making access attempts (including emergency call attempts) or responding to pages in specified areas of a PLMN. Such situations may arise during states of emergency, or where 1 of 2 or more co-located PLMNs has failed. Broadcast messages are available on a cell by cell basis indicating the class(es) or categories of subscribers barred from network access. The use of these facilities could allow the network operator to prevent overload of the access channel under critical conditions. It is not intended that access control be used under normal operating conditions. It should be possible to differentiate access control between CS and PS domains. Details on the existing access control are specified in 3GPP TS 23.122 and 3GPP TS 25.304. Not all RATs need to support access control functionality.

All UEs are randomly allocated one of Access Classes 0 to 9, and the allocated Access Class value is stored in the SIM/USIM. In addition, UEs may be members of one or more out of 5 special categories (Access Classes 11 to 15), also held in the SIM/USIM. These are allocated to specific high priority users as follows (the following enumeration is not meant as a priority sequence):
> Access Class 15: PLMN Staff;
> Access Class 14: Emergency Services;
> Access Class 13: Public Utilities (.g. water/gas suppliers);
> Access Class 12: Security Services;
> Access Class 11: For PLMN use.

### * Access Class Barring (ACB)

If the UE is a member of at least one Access Class which corresponds to the permitted classes as signalled over the air interface, and the Access Class is applicable in the serving network, access attempts are allowed. Additionally, in the case of the access network being UTRAN the serving network can indicate that UEs are allowed to respond to paging and perform location registration, even if their access class is not permitted. Otherwise access attempts are not allowed. Otherwise access attempts are not allowed. Also, the serving network can indicate that UEs are restricted to perform location registration, although common access is permitted. If the UE responded to paging it shall follow the normal defined procedures and react as specified to any network command. Access Classes are applicable as follows:
> Access Classes 0 ∼ 9: Home and Visited PLMNs;
> Access Classes 11 and 15: Home PLMN only if EHPLMN(equivalent Home PLMN) list is not present or any EHPLMN, or any EHPLMN;
> Access Classes 12, 13, 14: Home PLMN, and visited PLMNs (VPLMNs) belonging to the same home country. For this purpose the home country is defined as the country of the mobile country code (MCC) part of the IMSI.

Any number of these classes may be barred at any one time. In the case of multiple core networks sharing the same access network, the access network is able to apply Access Class Barring for the different core networks individually. The following is the requirements for enhanced Access control on E-UTRAN.

> The serving network shall be able to broadcast mean durations of access control and barring rates (e.g. percentage value) that commonly applied to Access Classes 0-9 to the UE. The same principle as in UMTS is applied for Access Classes 11-15.

> E-UTRAN shall be able to support access control based on the type of access attempt (i.e. mobile originating data or mobile originating signalling). E-UTRAN shall be able to form combinations of access control based on the type of access attempt (e.g. mobile originating and mobile terminating, mobile originating, or location registration). The 'mean duration of access control' and the barring rate are broadcasted for each type of access attempt (i.e. mobile originating data or mobile originating signalling).

> The UE determines the barring status with the information provided from the serving network, and perform the access attempt accordingly. The UE draws a uniform random number between 0 and 1 when initiating connection establishment and compares with the current barring rate to determine whether it is barred or not. When the uniform random number is less than the current barring rate and the type of access attempt is indicated allowed, then the access attempt is allowed. Otherwise, the access attempt is not allowed. If the access attempt is not allowed, further access attempts of the same type are then barred for a time period that is calculated based on the 'mean duration of access control' provided by the network and the random number drawn by the UE.

> The serving network shall be able to indicate whether or not a UE shall apply Access Class Barring for SMS access attempts in SMS over SGs, SMS over IMS (SMS over IP), and SMS over S102. This indication is valid for Access Classes 0-9 and 11-15.

> The serving network shall be able to indicate whether or not a UE shall apply Access Class Barring for multimedia telephony (MMTEeL) voice access attempts. This indication is valid for Access Classes 0-9 and 11-15.

> The serving network shall be able to indicate whether or not a UE shall apply Access Class Barring for MMTeL video access attempts. This indication is valid for Access Classes 0-9 and 11-15.

### * Access Control for CSFB

Access Control for circuit switched fallback (CSFB) provides a mechanism to prohibit UEs to access E-UTRAN to perform CSFB. It minimizes service availability degradation (i.e. radio resource shortage, congestion of fallback network) caused by mass simultaneous mobile originating requests for CSFB and increases the availability of the E-UTRAN resources for UEs accessing other services. When an operator determines that it is appropriate to apply access control for CSFB, the network may broadcast necessary information to provide access control for CSFB for each class to UEs in a specific area.

For CSFB to UTRAN or GERAN, the necessary information in the broadcast to provide access control for CSFB is the same as that specified above in the clause of ACB. In addition to those requirements the following apply:
> Access control for CSFB applies for Access Class 0-9 and Access Class 11-15. It shall not apply for Access Class 10.
> Access control for CSFB is applied for idle mode UE.
> Access control for CSFB applies to all CSFB services.
> Access control for CSFB may be provided by the VPLMN based on operator policy without accessing the HPLM.
> If Access control for CSFB, according to the UE's access class, disallows originating session requests for CSFB then a UE does not send mobile originating session requests for CSFB.
> If Access control for CSFB is applied by the UE for a mobile originating session request for CSFB, the UE bypasses enhanced Access control on E-UTRAN for that session.
> The criteria on which a UE determines whether Access control for CSFB allows or disallows originating session requests for CSFB are equivalent to those for enhanced Access control on E-UTRAN, as described in the clause of ACB.
> If access is not granted for the UE, mobile originating session requests for CSFB are restricted for a certain period of time to avoid overload of E-UTRAN due to continuous mobile originating session requests from the same UE. The duration of the period is determined using the same operation used in ACB.
> In case the network does not provide the Access control for CSFB information, the UE shall be subject to access class barring for Access Classes 0-9 and 11-15 as described in the clause of ACB.

### * Extended Access Barring (EAB)

EAB is a mechanism for the operator(s) to control Mobile Originating access attempts from UEs that are configured for EAB in order to prevent overload of the access network and/or the core network. In congestion situations, the operator can restrict access from UEs configured for EAB while permitting access from other UEs. UEs configured for EAB are considered more tolerant to access restrictions than other UEs. When an operator determines that it is appropriate to apply EAB, the network broadcasts necessary information to provide EAB control for UEs in a specific area. The following requirements apply for EAB:
> The UE is configured for EAB by the HPLMN.
> EAB shall be applicable to all 3GPP Radio Access Technologies.
> EAB shall be applicable regardless of whether the UE is in a Home or a Visited PLMN.
> A network may broadcast EAB information.
> EAB information defines whether EAB applies to UEs within one of the following categories: a) UEs that are configured for EAB, b) UEs that are configured for EAB and are neither in their HPLMN nor in a PLMN that is equivalent to it, c) UEs that are configured for EAB and are neither in the PLMN listed as most preferred PLMN of the country where the UE is roaming in the operator-defined PLMN selector list on the SIM/USIM, nor in their HPLMN nor in a PLMN that is equivalent to their HPLMN.
> EAB information also includes extended barring information for Access Classes 0-9.
> A UE configured for EAB uses its allocated Access Class(es), when evaluating the EAB information that is broadcast by the network, in order to determine if its access to the network is barred.
> If a UE that is configured for EAB initiates an emergency call or is a member of an Access Class in the range 11-15 and according to ACB that Access Class is permitted by the network, then the UE ignores any EAB information that is broadcast by the network.
> If the network is not broadcasting the EAB information, the UE is subject to access barring as described in the clause of ACB.
> If the EAB information that is broadcast by the network does not bar the UE, the UE shall be subject to access barring as described in the clause of ACB.
> In the case of multiple core networks sharing the same access network, the access network shall be able to apply the EAB for the different core networks individually.

Overriding Extended Access Barring is a mechanism for the operator to allow UEs that are configured for EAB to access the network under EAB conditions. The following requirements apply.

> The UE configured with EAB may be configured by the HPLMN with a permission to override EAB.

> For a UE configured with the permission to override EAB, the user or application (upper layers in UE) may request the UE to activate PDN connection(s) for which EAB does not apply.

> The UE overrides any EAB restriction information that is broadcast by the network as long as it has an active PDN connection for which EAB does not apply.

### * Application specific Congestion control for Data Communication (ACDC)

Application specific Congestion control for Data Communication (ACDC) is an access control mechanism for the operator to allow/prevent new access attempts from particular, operator-identified applications in the UE in idle mode. ACDC does not apply to UEs in connected mode. The network can prevent/mitigate overload of the access network and/or the core network. This feature is optional. The following requirements apply:
> This feature is applicable to UTRAN PS Domain and E-UTRAN.
> This feature is applicable to UEs in idle mode only that are not a member of one or more of Access Classes 11 to 15.
> ACDC does not apply to MMTEL voice, MMTEL video and SMS over IMS (SMS over IP) services.
> The home network is able to configure a UE with at least four and a maximum of sixteen ACDC categories to each of which particular, operator-identified applications are associated.
> The serving network is able to broadcast, in one or more areas of the RAN, control information, indicating barring information per each ACDC category, and whether a roaming UE shall be subject to ACDC control. The barring information may be similar to ACB information, and include mean durations of access control (i.e., barring timer) and barring rates (i.e., percentage value). If the barring timer is running due to a previous access attempt from an application in a certain given matched ACDC category, the UE may only allow access attempts from applications in higher ACDC categories (according to the corresponding barring information for those higher categories). If the barring timer is running due to a previous access attempt from an application in a certain given unmatched ACDC category or a uncategorized application, the UE may only allow access attempts from applications in higher ACDC categories than the lowest ACDC category broadcast (according to the corresponding barring information for those higher categories).
> The UE is able to control whether or not an access attempt for a certain application is allowed, based on this broadcast barring information and the configuration of ACDC categories in the UE.
> The serving network is able to simultaneously indicate ACDC with other forms of access control.
>> When both ACDC and ACB controls are indicated, ACDC overrides ACB.
>> If a UE is configured for both EAB and ACDC, and the serving network simultaneously broadcasts EAB information and ACDC barring information:
>>> If the UE determines as described in the clause of EAB that access to the network is not barred or as described in the clause of overriding EAB that it is permitted to override an EAB restriction, then access to the network is subject to ACDC.
>>> If the UE determines as specified in the clause of EAB that access to the network is barred and as specified in the clause of overriding EAB that it is not permitted to override the EAB restriction, then access to the network is barred.
> In the case of multiple core networks sharing the same access network, the access network is able to apply ACDC for the different core networks individually. For the mitigation of congestion in a shared RAN, barring rates are set equal for all participating operators.

When configuring the UE with categories of applications, the home network proceeds as follows:
> Applications whose use is expected to be restricted the least are assigned the highest ACDC category; and
> Applications whose use is expected to be restricted more than applications in the highest category are assigned the second-to-highest ACDC category, and so on; and
> Applications whose use is expected to be restricted the most shall either be assigned the lowest ACDC category, or not be categorized at all.

For a UE with ACDC categories configured, the applications on the UE that are not assigned to any ACDC category are treated by the UE as part of the lowest ACDC category broadcast by the serving network. If the operator requires differentiation with respect to these uncategorized applications, the operator avoids assigning applications to the lowest ACDC category. When applying ACDC, the serving network broadcasts barring information starting from the highest to the lowest ACDC category. The home network and the serving network may use different categorization. The serving network determines if ACDC applies to roaming UEs.

The number of ACDC categories in the UE may not be the same as the number of ACDC categories broadcast by the serving network. This may happen, e.g. when the UE is roaming and the number of categories broadcast by the serving network is different from the home network. Therefore the following rules may apply:
> If the serving network broadcasts more ACDC categories than the UE's configuration, the UE uses barring information for the matching ACDC category, and bars uncategorized applications using the barring information for the lowest category broadcast by the serving network, and ignores barring information for unmatched categories.
> If the serving network broadcasts barring information for fewer ACDC categories than the UE's configuration, the UE uses barring information for the matching ACDC category and bars other applications using the barring information for the lowest category broadcast by the serving network. A matching ACDC category is an ACDC category for which barring information is broadcast by the serving network and that has the same rank as the rank of a configured ACDC category in the UE. An unmatched ACDC category is either an ACDC category for which barring information is broadcast by the serving network but with no corresponding ACDC category configured in the UE, or an ACDC category configured in the UE but with no corresponding barring information broadcast by the serving network.

In addition to access control for ACB or CSFB and access control mechanisms such as EAB and ACDC, which are described above, there are access control mechanisms including service specific access control (SSAC), emergency calls, a multimedia priority service, control of UE capabilities, and prevention of mobile-originating signaling and/or data traffic. The network is able to control the behavior of UEs in E-UTRAN in connected mode to prevent mobile originating signalling and/or data traffic, while the access barring mechanisms described under ACB, SSAC, Access Control for CSFB, EAB and ACDC are being applied to UEs in idle mode.

Unlike a wireless communication scheme such as Wi-Fi, in a cellular network communication service which is directly installed by a communication operator, each communication operator intends to provide a communication service with quality of a predetermined level or more to multiple UEs. The amount of radio resources used in wireless communication varies with the width of a communication frequency allocated to each operator or the number of eNBs installed. The quality of a communication service provided by each operator is additionally affected by many parameters such as the number of subscribers. Particularly, assuming that a data speed provided by one eNB is X mbps and a data speed of Y mbps per call is required for one user in a voice call service which is the most fundamental communication service, a maximum amount of simultaneous calls supportable by one eNB may be calculated as X/Y. Therefore, if as many calls as X/Y are being simultaneously performed in one cell, a new call of another user may not be correctly made. As another example, Internet browsing or a chat service may be considered. If the number of users who simultaneously use the service in one cell is K and a maximum speed capable of being simultaneously provided in one cell is M, a communication service may be provided to each user at an average speed of M/K mbps. However, in some cases, prioritized processing may be needed for a certain user according to characteristics of the user. For example, if any UE A is a UE of a normal user and UE B is a UE of a special user, for example, a UE of a police officer, then call/Internet data generated by UE B may be more important than call/Internet data generated by UE A. Therefore, if UE A and UE B simultaneously start to make a call, a priority call should be given to UE B. If data is simultaneously generated, it may be desirable to provide a higher data speed to UE B. To support this operation, a cellular communication system indicates which UE can access a network before a UE accesses the network or which parameter should be used during access attempt.

However, when a certain UE (hereinafter, a remote UE) currently accesses the network through another UE (hereinafter, a relay UE), if traffic of the remote UE is not controlled, the network cannot perform the above operation (an access control/management operation of each UE). For example, it is assumed that a smartphone provides a tethering service. The smartphone may perform an IP connection by accessing a cellular system through a communication system such as LTE. If the smartphone provides the tethering service to a smartwatch using a hotspot function, the smartwatch is connected to the smartphone using communication technology such as Wi-Fi. Then, an eNB or a network such as EPC cannot control access caused by the smartwatch. Even if the smartwatch generates an important emergency call or generates data of a low priority, for example, a message such as "keep alive", the network cannot distinguish between the two scenarios. Additionally, a problem occurs in that quality of service (QoS) suitable for each situation cannot be provided in consideration of a priority of a variety of data generated between the smartphone and another smartphone.

Particularly, functions supported by the remote UE and the relay UE may differ. For example, the following situation is assumed: the remote UE is an MTC UE and is configured with EAB, the relay UE is a smartphone and does not support EAB functionality, and EAB is enforced within a cell in which the remote UE and the relay UE are located. Since the relay UE does not support the EAB functionality and thus the relay UE does not understand EAB related information, it is unclear whether EAB related congestion control is applied to the remote UE and is enforced. In other words, if access control mechanisms supported by the remote UE and the relay UE differ, whether the access control mechanism is applied may be ambiguous.

Access control is not performed in a WLAN interface. Then, the remote UE transmits data to the relay UE without limitation. In this case, if the relay UE cannot transmit data to the eNB due to access control by the eNB, data transmitted by the remote UE to the relay UE is unnecessary, thereby causing waste of radio resources.

Therefore, the present invention intends to propose a method of providing a proper radio communication service to each UE by effectively controlling access to the network by the remote UE and the relay UE when the remote UE receives a network service such as a PDN connection through the relay UE. The present invention also proposes a method of providing a service without service interruption to the remote UE and the relay UE when a UE desires to access the network through another UE serving as a relay.

While the present invention will be described hereinbelow based on an LTE eNB, the present invention is applicable to the case in which target and source systems/cells are different systems/cells.

A remote UE may transmit capability information thereof to a relay UE. For example, access control may be performed using the following steps.

> Step 1. The remote UE transmits capability information thereof in a process of establishing a connection with the relay UE. In this case, the remote UE may transmit information about an access control scheme supported thereby, for example, information as to whether the remote UE supports EAB.

> Step 2. The relay UE analyzes the capability information transmitted by the remote UE and checks whether there is capability which is not supported thereby.

> Step 3. If there is capability which is not supported by the relay UE in Step 2, the relay UE denies a connection request or data transfer request made by the remote UE. In Step 2, if the relay UE supports all capabilities in the information transmitted by the remote UE, the relay UE accepts the connection request or data transfer request made by the remote UE. For example, although the remote UE informs the relay UE that EAB has been configured or the remote UE supports EAB capability, if the relay UE does not understand EAB or does not support EAB, the relay UE may reject the request made by the remote UE.

As another considered method, the relay UE may transmit capability information thereof to the remote UE. For example, in a process of selecting the relay UE (refer to S1230 of FIG. 12), the remote UE compares capability information thereof or configuration information with capability information of relay UEs and selects a relay UE satisfying the capability information thereof. For example, if the remote UE is configured to use EAB, the remote UE may select a relay UE that informs the remote UE that EAB is supported among neighbor connectable relay UEs and establishes a connection with the relay UE. In the connection establishment procedure, if the remote UE has data to be transmitted and requests that the relay UE transmit the data, the remote UE may inform the relay UE of whether EAB should be applied to the data. Upon receiving the request for data transmission, the relay UE confirms information indicating whether EAB is applied, which has been transmitted together with the data. If the relay UE is informed that EAB needs to be applied in a cell on which the relay UE camps, i.e., if the relay UE is commanded by the remote UE to apply EAB, the relay UE applies EAB related access control information. If access is allowed, the relay UE transmits an RRC connection request to the cell.

Referring to FIG. 13, relay capability information may be used as a parameter included in a UE-to-network relay discovery announcement message. The relay capability information includes information about capabilities or services that the relay UE supports. For example, the relay capability information may indicate which access control mechanism the relay UE supports, for example, whether EAB is supported.

Referring to FIG. 14, remote UE capability information may be used as a parameter included in a UE-to-network relay discovery request message (S1410). The remote UE capability information includes, for example, information about a supported bandwidth or frequency. The UE capability information may further include access control related information configured for the remote UE, for example, information related to an access control mechanism supported by the remote UE or information related to an access control mechanism configured to be used. The relay capability information may be used as a parameter included in a UE-to-network relay discovery response message (S1420a or S1420b). The relay capability information includes information about capabilities or services that the relay UE supports. For example, the relay capability information may indicate which access control mechanism the relay UE supports, for example, whether EAB is supported.

Even though relay UEs transmit relay UE capability information and the remote UE selects a relay UE that supports a desired function/service, if the remote UE desires a function/service that the relay UE does not support while communicating with the relay UE, the remote UE may inform the relay UE of this fact. The remote UE may notify the relay UE that the remote UE will be disconnected from the relay UE and may transition to a direct connection mode or establish a connection with another relay UE. Upon receiving connection release from the remote UE, the relay UE may delete context of the remote UE.

Although EAB is configured to be used for the remote UE, EAB may not be used in a cell on which the remote UE and the relay UE camp. If an EAB function is not used in a cell and EAB is not used in the cell, it is unnecessary to check whether the relay UE supports EAB. Therefore, although the relay UE does not support EAB, if EAB is not used in a cell in which the relay UE resides, the remote UE may receive a service by accessing the relay UE. However, if the relay UE does not support EAB, the relay UE is not aware of whether EAB is supported in a cell on which the relay UE camps. To solve this problem, the relay UE transmits a system information block (SIB) received in the cell to the remote UE and then the remote UE determines whether EAB is applied to the cell by analyzing the SIB received from the relay UE. Even though the relay UE does not support EAB, the remote UE analyzes the SIB received from the relay UE. If it is determined that EAB is not applied to the cell, the remote UE establishes a connection with the relay UE and, when necessary, the remote UE requests that the relay UE transmit data.

The relay UE and the remote UE should always prepare for mobility support, i.e., a probability of change of a cell. Different cells to which UEs move may be using EAB or may not be using EAB according to each situation. Therefore, if the relay UE enters a new cell, the relay UE should inform the remote UE that the relay UE has entered the new cell and simultaneously transmit an SIB or access related information to the remote UE. In a state in which the remote UE has been connected to a relay UE that does not support EAB, if the relay UE enters a cell to which EAB is being applied, the remote UE should be immediately disconnected from the relay UE and search for another relay UE to establish a connection with another relay UE.

A radio interface between the remote UE and the relay UE may use WLAN, i.e., IEEE 802.11 technology, and the relay UE and the eNB may use LTE technology to provide a network access service to the remote UE. The WLAN is not technology defined in 3GPP and does not provide consistent congestion control and access control functions in a multi-user environment. If numerous UEs are present in a cell in which the relay UE is located and there is much traffic, data transmission from the relay UE to the eNB may not be smoothly performed. Even in this case, if the remote UE continuously attempts to transmit data, access load may further increase in the cell. Since the frequency band of Wi-Fi is an unlicensed band and is different from the frequency band of a cellular system, it is further difficult to secure linkage between the Wi-Fi band and the cellular band.

To solve this problem, the eNB may inform the relay UE of whether to permit access using the WLAN between the relay UE and the remote UE. The relay UE may establish a connection with the remote UE only when use of the WLAN is permitted in the radio interface according to information received from the eNB or the network. Alternatively, if the remote UE requests data transmission, the relay UE may transmit data received from the remote UE to the eNB according to the data transmission request.

According to information indicated by a cell in which the relay UE is positioned, if technology such as WLAN cannot be used in the radio interface from the remote UE to the relay UE, the relay UE informs the remote UE of this fact. Then, the remote UE uses a D2D mode defined in 3GPP instead of the WLAN or switches from an indirect mode to a direct mode in which a direct connection to the eNB is performed. Alternatively, in this case, the remote UE terminates a connection with the relay UE.

When CSFB is used, the relay UE may start a voice call or the remote UE may start the voice call. If the relay UE starts the voice call, a communication service is not supported for the remote UE when the relay UE arbitrarily moves to a WCDMA network and when the remote UE that does not support a WCDMA function is commanded by the eNB to move to the WCDMA network together with the relay UE. Conversely, if the relay UE cannot move to the WCDMA network due to the remote UE, a voice call is not supported for the relay UE. In consideration of mobility of the UEs, the following situation may occur: inter-RAT handover of the relay UE from an E-UTRAN to a non-E-UTRAN and intra-LTE handover between an area in which remote UE access via relay UE (REAR) is supported and an area in which REAR is not supported.

Each eNB continues to check radio link quality of a UE and a cell that the UE has accessed, for continuity of a communication service provided to each UE. If a cell better than the cell is present, the eNB hands over the UE to the better cell. However, if the better cell does not support access thereto by the remote UE via the relay UE, the eNB that the relay UE has currently accessed should not hand over the relay UE to a cell in which the operation of the remote UE is not supported. However, in a current handover procedure based on radio quality, a new cell is unilaterally selected and, as soon as the relay UE moves to the new cell, the relay UE continuously receives a service but the remote UE has a high possibility that service interruption will occur. To solve this problem, the present invention proposes the following methods.

### * Example 1)

If context for a UE is configured in the eNB, a network transmits information about cells, PLMNs, or RATs that the UE should not consider as handover candidates when the UE provides connectivity to another UE, i.e., a remote UE. The information may be included in a handover restriction list. For example, it is assumed that UE A acts as a relay UE and UE B acts as a remote UE. If the UE A establishes an RRC connection with eNB C, information about UE A is transmitted by a core network to eNB C. In this case, eNB C stores the handover restriction list information. The handover restriction list information includes information used when UE A is in a normal mode, i.e., when an accessed remote UE is not present and information used when UE A is in a relay mode, i.e., when the accessed remote UE is present. Therefore, the eNB determines which information should be used among information included in the handover restriction list information according to whether there is a remote UE connected to UE A. The eNB selects a permitted cell among handover target candidate cells according to the information included in the handover restriction list information and performs handover. For example, the handover restriction list information may be included in an initial context setup request message that an MME transmits to the eNB. If the handover restriction list information further includes information under a 'REAR operation' field, the eNB may determine that a forbidden PLMN/RAT/location area (LA)/routing area (RA)/tracking area (TA) under the 'REAR operation' field is not considered as a handover target for a corresponding UE.

The handover restriction list information defines roaming or access restriction of a subsequent mobility action for causing the eNB to provide information about a target of a mobility action for a UE, such as handover and a cell change order (CCO), or information about selection of a secondary cell group (SCG) during a dual connectivity operation. If the eNB receives a handover restriction list information element (IE), the eNB overwrites previously received restriction information. The following table shows a part of a handover restriction list IE including information according to the present invention.

**[Table 2]**

| IE/Group Name | Presence | Range | IE type and reference | Semantics description |
|---|---|---|---|---|
| ... | ... | ... | ... | ... |
| REAR operation | O | | | |
| Serving PLMN | M | | 9.2.3.8 | |
| Equivalent PLMNs | | *0.. <maxno of EPLMNs* > | | Allowed PLMNs other than a serving PLMN. This list corresponds to a list of "equivalent PLMNs" defined in 3GPP TS 24.301. This list is a part of roaming restriction information. Roaming restrictions are applied to PLMNs other than a serving PLMN and equivalent PLMNs. This information is information of PLMNs to which handover of the relay is allowed when the UE acts as the relay. |
| >PLMN Identity | M | | 9.2.3.8 | |
| Fobidden TAs | | *0..*<*maxno of EPLMNs PlusOne>* | | Intra-LTE roaming restrictions. This information is information about TAs to which the relay should not be handed over when the UE acts as the relay. |
| >PLMN Identity | M | | 9.2.3.8 | PLMNs of forbidden tracking area codes (TACs) |
| >Forbidde n TACs | | *1.. <maxno of ForbTAC s*> | | |
| >>TAC | M | | 9.2.3.7 | TAC of forbidden TAI |
| Forbidden LAs | | *0.. <maxno of EPLMNs PlusOne>* | | Inter-3GPP RAT roaming restrictions. This information is information about LAs to which the relay should not be handed over when the UE acts as the relay. |
| >PLMN Identity | M | | 9.2.3.8 | |
| >Forbidde n LACs | | *1.. <maxno of ForbLAC s*> | | |
| >>LAC | M | | OCTET STRING (SIZE(2)) | |
| Forbidden inter RATs | O | | ENUMERA TED(ALL, GERAN, UTRAN, CDMA2000, ..., GERAN and UTRAN, CDMA2000 and UTRAN) | Inter-3GPP and 3GPP2 RAT access restrictions. This information is information about RATs to which the relay should not be handed over when the UE acts as the relay. |

However, according to information received from a core network, if a target cell is lacking in radio resources even though the target cell supports an operation of the remote UE, i.e., a REAR operation, handover to the target cell should be avoided. For example, when a Uu interface resource is sufficient in the target cell but a PC5 interface resource is insufficient, if handover to the target cell occurs, it may be difficult to provide a communication service to the remote UE although the relay UE may continue to receive the communication service. In the handover restriction list, a TA/RA unit is a minimum unit and thus information as to whether a cell or an eNB belonging to each TA supports a REAR operation is not provided. Such a problem can be solved through exchange of information between eNBs that manage respective cells. That is, each eNB may manage neighboring cell list information and confirm whether each neighboring cell supports the REAR operation. To transfer initialization information for transport network layer (TNL) association, whether to support the REAR operation of each neighboring cell may be included in an X2 setup request (refer to 3GPP TS 36.423), which is a message transmitted to a neighboring eNB by the eNB. The following table shows a part of the X2 setup request message including information as to whether the REAR operation of each cell is supported according to the present invention.

**[Table 3]**

| IE/Group Name | Presence | Range | IE type and reference | Semantics description | Criticality | Assigned Criticality |
|---|---|---|---|---|---|---|
| ... | ... | ... | ... | ... | ... | ... |
| Serving cells | | *1* .. *<maxCelli neNB>* | | Complete list of cells served by the eNB | YES | reject |
| >Served Cell Information | | M | | 9.2.8 | | |
| >Neighbour Information | | *0* .. *<maxnoof Neighbours>* | | | | |
| >>ECGI | M | | ECGI 9.2.14 | E-UTRAN Cell Global Identifier of the neighbour cell | | |
| ... | ... | ... | ... | ... | ... | ... |
| >> Support REARoperation | O | | Boolean | Indicate whether the cell support REAR operation or not. | | |

In Table 3, "support REARoperation" information may also be included in another message, for example, eNB configuration update, and may be updated whenever a situation of each eNB is changed.

As another method, a source eNB may transmit a handover request to a plurality of neighboring cells whenever the UE performs handover. The source eNB may indicate, in the handover request message, that the relay UE is performing the REAR operation. The following table shows a part of the handover request message including information about the REAR operation according to the present invention. The handover request message is transmitted to a target eNB by the source eNB in order to request preparation of resources for handover.

**[Table 4]**

| IE/Group Name | Presence | Range | IE type and reference | Semantics description | Criticality | Assigned Criticality |
|---|---|---|---|---|---|---|
| ... | ... | ... | ... | ... | ... | ... |
| Need for REARoper ation | O | | Boolean | Indicate whether the UE is a relay doing REAR operation | | |

If the target eNB can support the REAR operation of the relay UE and other conditions are satisfied, the target eNB replies with a handover request acknowledge message. Additionally, the target eNB may directly inform the relay UE that the REAR operation may be continuously used even in a target cell through a support REAR operation field of the handover request acknowledge message. If the target eNB cannot support the REAR operation, the target eNB may reply with handover preparation failure. The following table shows a part of the handover request acknowledge message including information about the REAR operation. The handover request acknowledge message is transmitted to a source eNB by the target eNB to indicate resources prepared by the target eNB.

**[Table 5]**

| IE/Group Name | Presence | Range | IE type and reference | Semantics description | Criticality | Assigned Criticality |
|---|---|---|---|---|---|---|
| ... | ... | ... | ... | ... | ... | ... |
| Support REAR operation | O | | | Indicate whether the target cell can support REAR operation. | | |

Additionally, when the target eNB cannot support the REAR operation for some reasons, the target eNB may indicate, through a cause field, the reason why the REAR operation cannot be supported. The following table shows a part of a handover preparation failure message including the information about the REAR operation according to the present invention. The handover preparation failure message may be transmitted by target eNB to inform the source eNB that handover preparation has failed.

Through the above procedure, the source eNB may determine which eNB should be selected from among candidate target eNBs in order for the relay UE managed thereby to continuously perform the REAR operation. The source eNB may inform the relay UE that handover to a corresponding cell should be performed.

### * Example 2)

Even if the relay UE and the remote UE are associated, the relay UE is not always in an RRC connected state. For example, in order to reduce burden of the eNB, the relay UE may remain in an RRC idle state. In this case, the relay UE should first search for cells capable of supporting the REAR operation from among candidate cells and then select a cell that will actually perform a cell reselection procedure from among the cells capable of supporting the REAR operation. To this end, the present invention proposes additionally indicating whether cells support the REAR operation when a serving cell transmits neighboring cell information. For example, the relay UE which is in an idle mode performs measurement for neighboring cells and, if there is no remote UE associated therewith, performs the cell reselection procedure of selecting a cell having the best signal among cells satisfying an S criterion (refer to 3GPP TS 36304) among the neighboring cells. If there is a remote UE associated with the relay UE, the relay UE may confirm a supportRearoperation value in an SIB of each cell satisfying S criterion and perform the cell reselection procedure of selecting a cell having the best signal from among cells supporting the REAR operation. For example, system information block type 4 (SIB4) including neighboring cell related information for intra-frequency cell reselection may include the supportRearoperation value indicating whether a REAR operation is supported.

However, according to a situation, for example, in a situation in which a candidate cell supporting the REAR operation is not present, the relay UE inevitably needs to move to a cell in which the REAR operation is not supported. To minimize interruption of services provided to the remote UE, when the relay UE connected to the remote UE moves to a cell in which the REAR operation is not supported, it is desirable to connect the remote UE as fast as possible from an indirect mode via the relay UE to a direct mode for a direct connection to an eNB. To support this operation, according to the present invention, if it is impossible to hand over the relay UE to another cell while maintaining an indirect mode of the remote UE associated with the relay UE when the eNB hands over the relay UE to another cell, it is necessary to first hand over the remote UE to a proper cell. In this procedure, in order to establish a direct mode connection to a cell having the best radio quality, a serving eNB may command the remote UE to perform measurement and transmit a measurement result. In this case, since the remote UE has been connected to the serving cell/eNB through the relay UE, the following method may be considered. If the serving cell/eNB and the remote UE can exchange an RRC message, the serving cell/eNB transmits a measurement configuration message to the remote UE and the remote UE performs measurement according to the measurement configuration message and transmits the measurement result to the serving cell/eNB. The serving cell/eNB selects a handover and/or target cell for the remote UE based on the measurement result and executes handover. Upon receiving a handover command or a handover related message, the remote UE performs handover and additionally performs a procedure of releasing a connection from the relay UE in the handover procedure. Alternatively, the remote UE may implicitly consider that the remote UE is disconnected from the relay UE. Next, the serving cell/eNB hands over the relay UE to a proper target cell/eNB.

Similarly, even when the relay UE is in an idle mode, the relay UE may inevitably move to a cell in which the REAR operation is not supported. In this case, the relay UE informs the remote UE that the relay UE has moved to the cell in which the REAR operation is not supported. Then, the remote UE releases a connection from the relay UE and switches to the direct mode to perform a procedure of directly registering and connecting to the eNB and/or the core network. After the relay UE performs a cell reselection procedure, if the relay UE receives system information in a new cell and the cell does not transmit information indicating that the cell supports the REAR operation through the SIB, the relay UE may determine that the cell does not support the REAR operation. If there is a remote UE associated with the relay UE, the relay UE may perform a procedure of releasing association and additionally inform the remote UE that the relay UE is in a cell in which the REAR operation is not supported.

While Example 1 and Example 2 have described the present invention from the viewpoint of support of the REAR operation, a remote/relay UE behavior according to the present invention will be described hereinbelow by taking as an example the case in which a service supported by the remote UE is different from a service supported by the relay UE.

### * Example 3)

If the remote UE is powered on to perform an attach procedure or an area (TA/RA etc.) to which the remote is connected is changed, the remote UE will perform a procedure of directly or indirectly registering a position thereof to a network through the relay UE. Through an attach accept or tracking area update (TAU) accept message that the network transmits, the relay UE and the remote UE may be aware of whether voice over LTE (VoLTE), i.e., a voice call service through a PS network, is supported in a cell or area in which the relay UE and the remote UE currently reside. If the remote UE receives information indicating that the VoLTE service is not supported in a corresponding area from the network or indirectly from the relay UE, the remote UE determines, according to a preferred operation mode, whether to use an indirect 3GPP connection through the relay UE or use a direct 3GPP connection for directly transmitting and receiving signals and information to and from the eNB and performs an operation based on the determined result. In a situation in which the remote UE has already used the indirect mode, if the remote UE confirms that the remote UE has entered an area in which VoLTE, i.e., a voice service through PS, is not supported through a TAU procedure, the remote UE releases a connection from the relay UE and transitions to a direct connection mode for establishing a direct connection with the network including the eNB. Desirably, the operation may be applied only when the remote UE is a UE performing a voice call as well or when the remote UE is designated as a voice centric UE. For example, the following procedure may be performed.

> Step 1. A UE checks whether the UE is configured as a voice centric UE or a data centric UE. That is, the UE checks whether the UE is configured to be registered to the network by prioritizing voice or the UE is configured to be registered to the network by prioritizing data according to subscription information thereof. Thereafter, the UE proceeds to Step 2 or Step 3.

> Step 2. If the UE is configured as a data centric UE, the UE checks whether the UE is configured to operate as the remote UE, i.e., in the indirect mode.

>> Step 2a. If the UE is configured to operate in the indirect mode, the UE checks whether there are available relay UEs in the vicinity thereof and selects a relay UE that can guarantee quality of a predetermined level or more to establish a connection using the indirect mode.

>> Step 2b. If the UE is not configured to use the indirect mode, the UE selects a cell capable of guaranteeing quality of a predetermined level or more and uses the direct mode.

> Step 3. If the UE is configured as a voice centric UE, the UE checks whether CS fallback is configured for the UE.

>> Step 3a. If the UE is not configured to use CS fallback, the remote UE establishes a connection with the network through the relay UE. If IMS voice is not available in a cell of the network, the remote UE releases a connection from the relay UE, stops using the indirect mode, and uses the direct connection mode. If IMS voice is available in a corresponding network/cell, the remote UE maintains use of the indirect mode. Next, the relay UE checks whether IMS voice is available in a located area whenever TA is changed. The remote UE also checks whether IMS voice is available based on information received from the relay UE and information received from the network and, if IMS voice is unavailable, the remote UE transitions to the direct mode.

>> Step 3b. If the UE is configured to use CS fallback, the UE performs a registration procedure to use the direct connection.

If CS fallback is used, this means that a CS based voice call, rather than an IP based voice call such as VoLTE, is used when a UE should always support voice call, as in a smartphone. For example, if an operator that has installed an LTE network all over the country desires to perform a voice call based on CS of a legacy WCDMA/GSM rather than VoIP through an LTE network, the operator may configure the UE to use CS fallback.

While the above example has been described focusing on whether CS fallback is configured, a similar mechanism may also be used for IMS voice. For example, when CS fallback is not configured for the UE and the UE is configured as a voice centric UE, if IMS voice is unavailable as a confirmation result by the UE through the relay UE or through information exchange with the network, the UE may stop using the indirect mode, transition to the direct mode, and, when necessary, switch to WCDMA. If the UE stops using the indirect mode and switches to the direct mode, a NAS layer may command an RRC layer to stop using the indirect mode and transition to the direct mode in order to prevent the RRC layer from unnecessarily managing the relay UE through a PC5 interface.

The above method has proposed a method in which the remote UE accesses the relay UE, checks whether the remote UE can receive a voice call service in a cell related to the current remote UE in a procedure of registration to the network, and directly establishes a connection with a cell when the remote UE cannot receive the voice call service. However, in this method, the remote UE should be connected to the relay UE so that a connection time unnecessarily increases and therefore a time during which a voice call is not performed increases. To avoid these problems, a method in which the relay UE informs the remote UE of a voice call situation before the remote UE establishes a connection with the relay UE may be used. For example, the relay UE may transmit information thereabout and simultaneously transmit information as to whether IMS voice is available or CS fallback is supported in a cell that the relay UE has currently accessed. For example, referring to FIG. 13, for UE-to-network relay discovery, the relay UE (e.g., UE-1 of FIG. 13) may announce, to neighboring remote UEs (e.g., UE-2, UE-3, UE-4, and UE-5 of FIG. 13), whether IMS voice is supported in a network that the relay UE has currently accessed or a network that the relay UE can access, through a UE-to-network discovery announcement message (S1310).

Upon selecting the relay UE, the remote UE may select a relay UE indicating that IMS voice is available. If there is no relay UE indicating that IMS voice is available, the remote UE may release the indirect mode or may not use the indict mode and may access a cell using the direct mode. Alternatively, upon receiving information indicating that CS fallback has been configured in a current cell based on information transmitted by a neighboring relay UE, the remote UE may immediately stop using the indirect mode and transition to the direct mode for directly accessing the cell. Referring to FIG. 14, for UE-to-network relay discovery, the remote UE (e.g., UE-1 of FIG. 14) may include an indicator indicating that the remote UE searches for a relay UE in which IMS voice is available in a UE-to-network relay solicitation message (S1410). If the UE-to-network relay solicitation message indicates that the remote UE searches for a relay UE in which IMS voice is available, the relay UE (e.g., UE-2, UE-3, UE-4, or UE-5 of FIG. 14) transmits a UE-to-network relay discovery response message only when IMS voice is available.

Notably, connection setup delay may be undesirable in terms of a customer. Especially, an emergency call, for example, number 119 or 112, should be made, the connection setup delay unnecessarily increases a voice connection time, thereby adversely affecting a customer experience. To prevent this problem, a UE configured to use both the indirect mode and the direct mode checks whether CS fallback is configured therefor prior to deciding to use the indirect mode. If the UE is configured to use CS fallback, the UE may operate to use only the direct mode without using the indirect mode.

### * Example 4)

Not only the remote UE but also the relay UE may perform a voice call. For example, the relay UE may be a smartphone and the remote UE may be a smartwatch. If the relay UE starts to make a voice call to perform CS fallback, Internet access of the remote UE is disconnected until the relay UE terminates the voice call. Accordingly, a method of guaranteeing quality of Internet access of the remote UE while effectively supporting CS fallback of the relay UE is needed.

To solve the above problem, a UE functioning as a relay may check whether a CS fallback function is configured therefor before the UE starts to perform a relay operation. A UE configured to use CS fallback does not perform an operation as a relay UE. That is, a UE configured to use CS fallback does not support access from the remote UE. A UE that is not configured to use CS fallback may perform an operation as the relay UE when necessary. That is, a UE that is not configured to use CS fallback supports access from the remote UE.

As another method, if a UE operates as a relay UE, i.e. operates to support access from the relay UE, the UE checks whether the UE is configured to use CS fallback. If the UE is configured to use CS fallback, the UE informs the remote UE that the UE has been configured to use CS fallback. For example, the relay UE may inform the remote UE that the relay UE has been configured to use CS fallback in a message such as a UE-to-network relay discovery announcement message. The remote UE may refer to the message upon determining which relay UE the remote UE should select. For example, the relay UE configured to use CS fallback may not select a remote UE using an application in which time is critical. Additionally, whether a remote UE can use the relay UE configured to use CS fallback may be configured for the remote UE.

As another method, if the relay UE starts to make a voice call and thus should perform CS fallback, the relay UE may inform the remote UE of information related to CS fallback. Upon recognizing that the relay UE starts to perform CS fallback, the remote UE may avoid occurrence of service interruption by selecting another relay UE or transitioning to the direct mode. If the relay UE starts to perform an operation related to CS fallback, the relay UE informs the remote UE that the relay UE starts to perform the CS fallback related operation and transmits measurement related configuration information or an SIB to the remote UE. The remote UE performs measurement based on the measurement related configuration information or the SIB. The network rapidly moves the remote UE to another cell based on a result of measurement of the remote UE and causes the remote UE to transition to the direct mode, thereby minimizing service interruption.

Alternatively, upon receiving an indication indicating that the relay UE starts to perform CS fallback, the remote UE directly releases a connection from the relay UE and transitions to the direct mode to perform access to the network or select another relay UE. In this procedure, in order to minimize service interruption, the remote UE may select a cell to which the relay UE has been connected immediately before the remote UE is connected to the relay UE. To cause the remote UE to select the cell to which the relay UE has been connected immediately before the remote UE is connected to the relay UE, the relay UE may inform the remote UE of information of the cell to which the relay UE is connected. Additionally, in order to reduce latency which can be generated when context of the remote UE is generated again from the beginning, when the remote UE is using the indirect mode, the cell/eNB to which the relay UE is connected may generate context related to the remote UE and transmit an identifier related to the remote UE to the remote UE. If the remote UE cannot use the relay UE any longer due to a situation of the relay UE, the remote UE transitions to the direct mode. In this case, the remote UE may transmit a message for reconfiguring an RRC connection to the eNB/cell using the identifier allocated from the eNB etc., in the indirect mode. Then, the eNB may recognize that the UE that has transmitted the message is a previous remote UE and rapidly configure a connection. If any UE switches from the indirect mode to the direct mode or from the direct mode to the indirect mode, the eNB informs an MME of this fact.

Alternatively, if a voice call is started and thus CS fallback should be started, the relay UE may command the remote UE to transition to the direct mode and starts CS fallback or a voice call setup procedure after the relay UE is disconnected from the remote UE in order to minimize service interruption of the remote UE. In this procedure, since the relay UE cannot endlessly wait for transition of the remote UE to the direct mode, the relay UE may use a timer. If the relay UE is not disconnected from the remote UE within a predetermined time, the relay UE may immediately start a CS fallback operation as soon as the timer expires.

In a situation in which the remote UE is connected to the relay UE in the indirect mode, if access by the relay UE to the network is restricted for some reasons, access by the remote UE to the network may also be restricted. However, for example, if simple data such as "keep alive" is generated by the remote UE, fast transmission of the "keep alive" data to the network may not be problematic. However, in an application such as healthcare monitoring, restriction of network access may be problematic. Therefore, the present invention additionally proposes the following method.

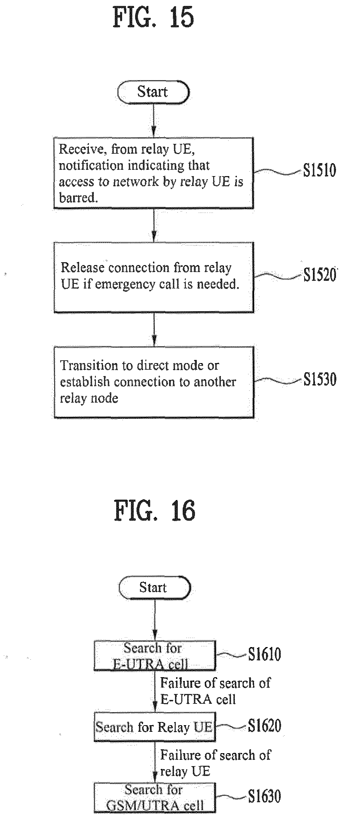

FIG. 15 illustrates a communication method of a remote UE according to the present invention.

If data to be transmitted to a network occurs and a remote UE is connected to a relay node through an indirect mode, the remote UE attempts to transmit the data to the network through the relay UE. In this procedure, prior to transmission of the data to the relay UE, the remote UE may check whether access to the network by the relay UE is forbidden. The relay UE may periodically inform the remote UE of whether the relay UE can access the network.

Alternatively, the relay UE may perform access control check for transmission of data thereof or transmission of data of another remote UE. If data transmission is barred, the relay UE may inform a remote UE connected thereto of information indicating that data transmission is barred. If barring of data transmission is released, the relay UE may inform the remote UE that barring of data transmission has been released.

If the relay UE fails to set up a connection with the network while establishing a connection with the network in order to transmit data of the remote UE connected to the relay UE to the network, receives a connection reject message from the network, or fails to perform access barring check, the relay UE informs the remote UE of this fact.

Upon receiving information indicating access to the network has been rejected or network access is not possible due to access control from the relay UE (S1510), the remote UE checks whether the remote UE can switch to a direct mode to directly access the network. To check whether the remote UE can switch from an indirect mode, the following operation may be performed. The remote UE may determine that the remote UE can switch to the direct mode from the indirect mode, when the UE is configured to be switched to the direct mode through previous network configuration in the case in which it is impossible for the UE to access the network through the indirect mode and when the network informs the remote UE of a service or a data type for which mode switching to the direct mode is permitted and data that the UE tries to transmit corresponds to the permitted service or data type, for example, the data corresponds to an emergency call, an application corresponding to specific QoS or priority, a specific IP packet, or a filter corresponding to the specific IP packet. If switching to the direct mode is allowed as a result of checking whether a connection mode can switch, the remote UE releases a connection from the relay UE (S1520) and switches to the direct mode to attempt to access the network (S1530). Alternatively, if an emergency call is generated by a UE that is using the indirect mode, the UE immediately switches from the indirect mode to the direct mode to attempt to perform call setup (S1530).

### * Example 5)

To cause a UE to properly receive paging or establish a proper communication environment by receiving an SIB, all current UEs are supposed to camp on at least one cell. Then, even if the UE fails to search for a PLMN to which the UE has subscribed, the UE may select even a PLMN of another operator to make an emergency call or receive a disaster text message. For example, when the UE accesses the network, if the UE stores configuration information received from the network in a SIM card and then powers on again after the UE is turned off, the UE performs cell search according to the configuration information. According to the prior art, if access to the network is released or the UE is powered on, the UE performs cell search according to RATs of an order designated by the configuration information. That is, if the UE supports multiple RATs, information as to in which order the UE uses RATs to search for a cell is stored in the SIM card. A UE that has subscribed to an LTE service is configured to first search for an LTE cell, i.e., an E-UTRA cell and, if the UE fails to search for the E-UTRA cell on which the UE is to camp, the UE may be configured to search for a 3G cell, i.e., a UTRA cell.

However, if the UE performs direct communication with the eNB, the UE inevitably uses high transmission output, thereby increasing battery consumption. To solve this problem, the indirect mode is introduced and a UE having a battery of low capacity may communicate with the eNB with the aid of a neighboring UE. In terms of battery saving, it is desirable for the UE using the indirect mode not to directly receive all information including an SIB from the eNB. If UEs use the indirect mode excessively, the following problems may arise. When any UE is located at a border of two countries and the two countries allocate any frequency to different operators, if the UE excessively transmits signals in the indirect mode, this may affect an operator of a country that the UE has not subscribed. When any UE is capable of performing communication using WCDMA as well as communication using LTE and when an operator to which the UE has subscribed has both an LTE network and a WCDMA network, if the UE excessively uses the indirect mode using LTE, the operator cannot manage load of the network. For example, the operator may desire to transmit any traffic through LTE and other traffic through WCDMA according to a situation. However, if UEs excessively use the indirect mode, the operator has difficulty in managing load of the LTE network and load of the WCDMA network. Therefore, the present invention is directed to distributing load of the network by controlling use of the indirect/direct mode of the UE and reducing propagation interference which may be generated between different networks.

According to the prior art, even if a UE supports both the indirect mode and the direct mode, the UE searches for a relay UE only when the UE fails to search for a proper cell on which the UE is to camp as a result of performing cell search using RATs supported thereby. That is, the UE first attempts to establish a Uu interface using RAT(s) supported thereby. If the UE fails to establish the Uu interface, the UE attempts to establish a PC5 interface with the relay UE. However, with introduction of a REAR operation, it may be more favorable for the UE to search for a remote UE rather than a cell. For example, when an IoT UE is positioned in an area having a large cell radius, the operator/network may cause the IoT UE to attempt to perform the indirect mode operation for power saving of the IoT UE. Alternatively, for a UE, such as a smartwatch, having a low battery capacity, a UE in which battery saving is important, or a UE located in a place (e.g., basement) in which it is difficult to search for a cell, it may be favorable to first search for the PC5 interface rather than the Uu interface. Accordingly, the present invention proposes permitting a UE to search for a cell of each RAT by prioritizing PC5 interface search over Uu interface search.

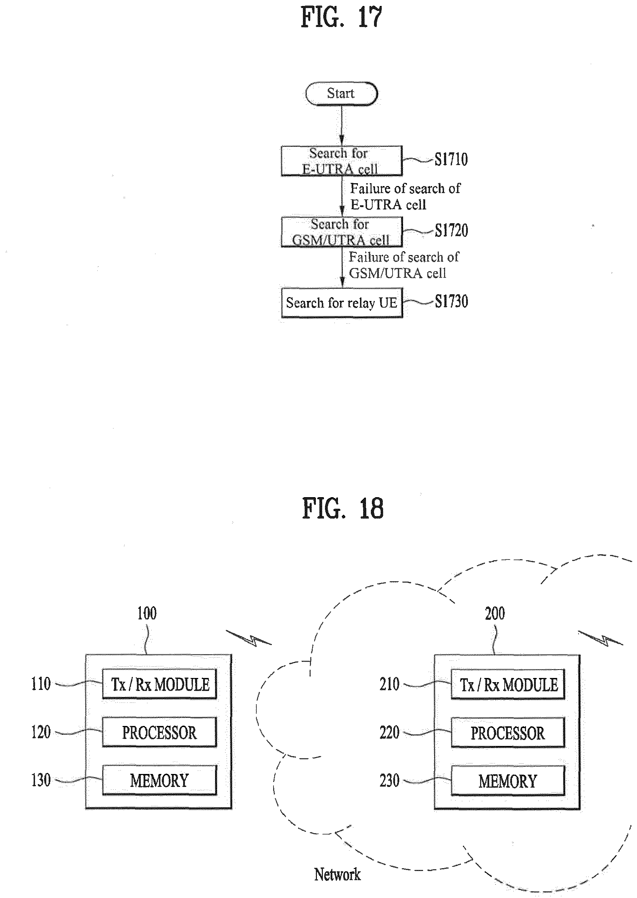

FIGS. 16 and 17 illustrate a connection procedure of a UE with a network according to the present invention.

Referring to FIG. 16, a UE that supports both a direct mode and an indirect mode may operate as follows according to the present invention.

> S1610. The UE checks whether a cell of an operator to which the UE has subscribed is present in all bands supportable thereby, using E-UTRA technology. That is, the UE searches for a cell on which the UE is to camp among cells supporting E-UTRA. For example, the UE searches for a cell on which the UE is to camp among LTE cells, i.e., E-UTRA cells. If the UE discovers an E-UTRA cell on which the UE is to camp, the UE camps on the cell. If the cell informs the UE that the cell supports the indirect mode, the UE uses the indirect mode when necessary.

> S1620. If the UE does not discover the cell in S1610, the UE checks whether the UE can use the indirect mode. If the UE can use the indirect mode, the UE checks whether a relay UE is present in the vicinity thereof. If the UE discovers the relay UE and the relay UE informs the UE that the relay UE supports a connection to an operator to which the relay UE has subscribed, the UE selects the relay UE and uses the indirect mode.

> S1630. If the UE does not discover the relay UE in S1620 and the UE supports another RAT, for example, GSM or UTRA, the UE selects a cell on which the UE is to camp using the other RAT. For example, if the UE supports UTRA, the UE checks whether there is a cell on which the UE is to camp among UTRA cells.

Referring to FIG. 17, a UE supporting the direct mode and the indirect mode may also operate as follows.

> S1710. The UE checks whether a cell of an operator to which the UE has subscribed is present in all bands supportable thereby, using E-UTRA technology. That is, the UE searches for a cell on which the UE is to camp among cells supporting E-UTRA. For example, the UE searches for a cell on which the UE is to camp among LTE cells, i.e., E-UTRA cells.

> S1720. If the UE does not discover an E-UTRA cell of the operator to which the UE has subscribed among E-UTRA cells but the UE supports another RAT, for example, GSM or UTRA, the UE checks whether a cell on which the UE is to camp is present using the other RAT. For example, if the UE supports UTRA, the UE checks whether there is a cell on which the UE is to camp among UTRA cells.

> S1730. If there is no cell on which the UE is to camp even using the other RAT in S1720, the UE checks whether the UE can use the indirect mode. If the UE can use the indirect mode, the UE searches for a relay UE supporting a connection to an operator to which the UE has subscribed using E-UTRA. If the UE discovers the relay UE supporting a connection to the operator to which the UE has subscribed, the UE starts to establish a connection with the relay UE.

According to the present invention illustrated in FIGS. 16 and 17, searching for the relay UE may be first performed prior to searching for a cell according to configuration of the operator/network. In other words, establishing a PC5 interface may be first attempted even before cell search for RATs supported by the UE is ended. According to the present invention, the UE can reduce unnecessary waste of power consumed for cell search. If the UE will use the PC5 interface, the UE can reduce power consumption generated by performing cell search through search of a Uu interface.

In some cases, in a situation in which a UE does not search for an E-UTRA cell corresponding to an operator to which the UE has subscribed (description of a memo: the situation may be divided into the cases: 1) the case in which an LTE cell is actually present in an area in which the remote UE is located and 2) the case in which the LTE cell is not actually present in the area in which the remote UE is located. In 1), the UE searches for the LTE cell, reads an SIB in the cell, and accesses the relay UE using PC information indicated by the SIB. In 2), since the UE cannot search for the SIB and the cell that transmit PC5 configuration information, the UE should perform a PC5 operation using previously acquired information (e.g., information stored in a SIM). In 2), whether the UE should perform the PC5 operation using the arbitrarily stored information or search for a WCDMA/GSM cell and perform the PC5 operation when the cell is not present is an interested issue. The present invention configures an operation which is to be performed first), a relay UE supporting a connection to the E-UTRA cell corresponding to the operator to which the UE has subscribed may be present and simultaneously a GSM cell or UTRA (i.e., WCDMA) cell corresponding to the operator to which the UE has subscribed may be present. In this case, the operator may previously determine priorities through configuration for the UE. In other words, according to the present invention, upon configuring priorities of search targets with which the UE attempts to establish a connection, the operator/network may determine priorities of link types of RAT(s), i.e., priorities of interface types, as well as priorities of RATs.

For example, the operator may inform the UE that an indirect 3GPP connection to E-UTRA is prioritized over a GSM/WCDMA cell. If the UE has not searched for a proper E-UTRA cell, the UE may first search for a relay UE that can support an indirect connection prior to attempting to searching for the GSM/WCDMA cell. If the UE discovers the relay UE, search of the WCDMA/GSM cell is omitted.

As another example, the operator may inform the UE that the GSM/WCDMA cell is prioritized over an indirect 3GPP connection to E-UTRA. In this case, if the UE fails to search for a proper E-UTRA cell, the UE may first search for the GSM/WCDMA cell. If the UE fails to discover the GSM/WCDMA cell, the UE may search for the relay UE capable of supporting an indirect connection.

As another example, the operator may set a quality reference value of the relay UE supporting an indirect 3GPP connection. If the UE fails to search for a proper E-UTRA cell, the UE searches for a relay UE capable of supporting an indirect connection and measures radio quality of a relay UE candidate. If the radio quality value of the relay UE candidate is higher than a reference value indicated by the operator, the UE establishes a connection with the relay UE candidate. If the UE fails to search for a relay UE satisfying the reference value, the UE may search for the WCDMA/GSM cell and attempt to select a cell.

According to the present invention, the UE may search for the relay UE for the REAR operation without performing cell search according to configuration of the network/operator.

A supported RAT may differ according to each UE. For example, a UE supporting only E-UTRA may use indirect 3GPP communication when the UE leaves E-UTRAN coverage. A UE supporting other RAT(s) as well as E-UTRA may use indirect 3GPP communication when the UE leaves E-UTRAN coverage. A UE supporting other RAT(s) as well as E-UTRA may use indirect 3GPP communication when the UE leaves E-UTRAN coverage and when the UE cannot search for any cell on which the UE is to camp using other RATs.

If the remote UE is connected to the relay UE, access of the remote UE may become equal to access of the relay UE. For example, if the relay UE has already been in an RRC connected state, the remote UE may also be regarded as an RRC connected state. If access of the relay UE has been permitted, access of the remote UE is also permitted. If access of the relay is restricted, access of the remote UE may also be regarded as being restricted. In this case, unbalance of access may occur according to a UE. That is, a UE using a direct mode performs access check in order to transmit data at every time and may restrict access according to a result of access check. However, a UE using an indirect mode may have more access opportunities according to an access state of the relay UE. Particularly, if the relay UE always operates in the RRC connected mode, the UE of the indirect mode, i.e., the remote UE, may always transmit data. To solve such unbalance, the present invention proposes the following methods.

If a UE desires to operate in an indirect mode, the UE may first establish an RRC/NAS connection with an eNB or a network in a currently located cell and then operate in the indirect mode only when the network gives permission. For example, the UE may attempt to perform an indirect connection with the network as follows. If the UE desires to operate in the indirect mode, the UE checks whether the indirect mode is permitted in a corresponding cell. The eNB may inform the UE of whether the indirect mode has been permitted in the cell, through an SIB of the cell. The UE receives the SIB and then requests the indirect mode only when the indirect mode has been permitted. If the UE determines to use the indirect mode and the indirect mode has been permitted in the cell, the UE establishes an RRC connection with the eNB in order to request use of the indirect mode. In a procedure of establishing the RRC connection with the eNB, the UE may inform the network/eNB that the UE attempts to perform access in order to use the indirect mode. For example, the UE may inform the network/eNB that the UE desires to use the indirect mode using a cause value in an RRC connection request message. Alternatively, the UE may signal, through a NAS message, that the UE desires to use the indirect mode. For example, the UE may indicate that the UE desires to use the indirect mode, through an attach request or TAU request message.

However, while any UE is using the indirect mode, if much load occurs in a cell in which the UE is located due to other UEs, the cell needs to release a connection from a UE having a low priority among UEs connected thereto in order to manage load. In this case, the cell will release a connection from a UE in the indirect mode by considering that most IoT devices such as a smartwatch are connected as the indirect mode. The UE in the indirect mode, from which the eNB determines to release a connection, may have a low priority. As soon as the UE releases an RRC connection, if the UE requests an RRC connection or requests the indirect mode again, this may be problematic. Therefore, in order to prevent this problem, the network/eNB may transmit, in an RRC connection rejection message or an RRC connection release message, information as to how much an indirect mode connection is forbidden. For example, a "WaitTimeforIndirectMode" field may be included in the RRC connection rejection message or the RRC connection release message. The following table shows the "WaitTimeforIndirectMode" field included in the RRC connection rejection message or the RRC connection release message.

**[Table 6]**

| | | |
|---|---|---|
| WaitTimeforIndirectMode | INTEGER (1..1800) | OPTIONAL, -- Need |
| ON | | |

The "WaitTimeforIndirectMode" field may be used to indicate how long a UE should not attempt to use/request the indirect mode.

If the UE that is using the indirect mode receives the RRC connection release message and the RRC connection release message includes WaitTimeforlndirectMode information, the UE does not request a new RRC connection until a corresponding time elapses.

"WaitTimeforlndirectMode" may also be included in the RRC connection rejection message. The network may directly inform the UE making an RRC connection request to use an indirect mode of how long the request is forbidden through "WaitTimeforIndirectMode".

FIG. 18 illustrates configuration of a UE and a network node according to a preferred embodiment of the present invention.

The UE 100 according to the present invention may include a transmission/reception (Tx/RX) module 110, a processor 120, and a memory 130. The Tx/RX module 110 may be referred to as a radio frequency (RF) unit. The Tx/RX module 110 may be configured to transmit and receive various signals, data and information to and from an external device. The UE 100 may be connected to the storage device by wire and/or wirelessly. The processor 150 may control overall operation of the UE 100, and be configured to calculate and process information for the UE 100 to transmit and receive to and from the external device. In addition, the processor 120 may be configured to perform the proposed operations of the UE. The memory 130 may store the calculated and processed information for a predetermined time, and may be replaced by another constituent such as a buffer (not shown).

Referring to FIG. 18, the network node 200 according to the present invention may include a Tx/RX module 210, a processor 220 and a memory 230. The Tx/RX module 210 may be referred to as an RF unit. The Tx/RX module 210 may be configured to transmit and receive various signals, data and information to and from an external device. The network node 200 may be connected to the storage device by wire and/or wirelessly. The processor 220 may control overall operation of the network node 200, and be configured to calculate and process information for the network node 200 to transmit and receive to and from the external device. In addition, the processor 220 may be configured to perform the proposed operations of the network node. The memory 230 may store the calculated and processed information for a predetermined time, and may be replaced by another constituent such as a buffer (not shown).

For configuration of the UE 100 and the network apparatus, the details described in various embodiments of the present invention may be independently applied or implemented such that two or more embodiments are simultaneously applied. For simplicity, redundant description is omitted.

The embodiments of the present invention may be implemented through various means. For example, the embodiments may be implemented by hardware, firmware, software, or a combination thereof.

When implemented by hardware, a method according to embodiments of the present invention may be embodied as one or more application specific integrated circuits (ASICs), one or more digital signal processors (DSPs), one or more digital signal processing devices (DSPDs), one or more programmable logic devices (PLDs), one or more field programmable gate arrays (FPGAs), a processor, a controller, a microcontroller, a microprocessor, etc.

When implemented by firmware or software, a method according to embodiments of the present invention may be embodied as an apparatus, a procedure, or a function that performs the functions or operations described above. Software code may be stored in a memory unit and executed by a processor. The memory unit is located at the interior or exterior of the processor and may transmit and receive data to and from the processor via various known means.

As described above, the detailed description of the preferred embodiments of the present invention has been given to enable those skilled in the art to implement and practice the invention. Although the invention has been described with reference to exemplary embodiments, those skilled in the art will appreciate that various modifications and variations can be made in the present invention without departing from the spirit or scope of the invention described in the appended claims. Accordingly, the invention should not be limited to the specific embodiments described herein, but should be accorded the broadest scope consistent with the principles and novel features disclosed herein.

### Industrial Applicability

The communication method described above is applicable to various wireless communication systems including IEEE 802.16x and 802.11x systems as well as a 3GPP system. Furthermore, the proposed method is applicable to a millimeter wave (mmWave) communication system using an ultrahigh frequency band.

## Claims

1. A method of establishing a connection with a network by a user equipment in a wireless communication system, the method comprising:
performing cell search using a first radio access technology (RAT) according to configuration information of the UE among the first RAT and a second RAT;
upon failing to search for a cell using the first RAT, performing relay UE search according to the configuration information; and
upon discovering a relay UE, starting to establish a connection with the relay UE.

2. The method of claim 1,
wherein the first RAT supports an indirect connection to the network.

3. The method of claim 1, further comprising
upon failing to search for the relay UE, performing cell search using the second RAT.

4. The method of claim 1,
wherein the configuration information includes information indicating that an indirect connection is prioritized over the second RAT.

5. The method of claim 1,
wherein the first RAT is evolved universal terrestrial radio access (E-UTRA) and the second RAT is global system for mobile communication (GSM) or universal terrestrial radio access (UTRA).

6. The method of claim 1,
further comprising receiving the configuration information.

7. A user equipment (UE) for establishing a connection with a network in a wireless communication system, the UE comprising,
a radio frequency (RF) unit, and
a processor configured to control the RF unit,
wherein the processor is configured to:
perform cell search using a first radio access technology (RAT) according to configuration information of the UE among the first RAT and a second RAT;
upon failing to search for a cell using the first RAT, perform relay UE search according to the configuration information; and
upon discovering a relay UE, start to establish a connection with the relay UE.

8. The UE of claim 7,
wherein the first RAT supports an indirect connection to the network.

9. The UE of claim 7,
upon failing to search for the relay UE, the processor performs cell search using the second RAT.

10. The UE of claim 7,
wherein the configuration information includes information indicating that an indirect connection is prioritized over the second RAT.

11. The UE of claim 7,
wherein the first RAT is evolved universal terrestrial radio access (E-UTRA) and the second RAT is global system for mobile communication (GSM) or universal terrestrial radio access (UTRA).

12. The UE of claim 7,
wherein the processor is configured to control the RF unit to receive the configuration information.
